# EUROPEAN PATENT SPECIFICATION

(11) **EP 4 707 770 B1**
(45) Date of publication and mention of the grant of the patent: **28.10.2026**
(21) Application number: 25198792.1
(22) Date of filing: 28.08.2025
(51) Int. Cl.: G01M 17/007

(54) **VEHICLE INSPECTION SYSTEM AND VEHICLE INSPECTION SYSTEM CONTROL METHOD**
FAHRZEUGINSPEKTIONSSYSTEM UND STEUERUNGSVERFAHREN FÜR FAHRZEUGINSPEKTIONSSYSTEM
SYSTÈME D'INSPECTION DE VÉHICULE ET PROCÉDÉ DE COMMANDE DE SYSTÈME D'INSPECTION DE VÉHICULE

(30) Priority: 04.09.2024 JP 2024151917
(43) Date of publication of application: 11.03.2026
(73) Proprietor: TOYOTA JIDOSHA KABUSHIKI KAISHA, Toyota-shi, Aichi-ken 471-8571 (JP)
(72) Inventor: KOIDE, Toshihiro, Toyota-shi, 471-8571 (JP); SHIMIZU, Koji, Toyota-shi, 471-8571 (JP); KOYAMA, Keisuke, Toyota-shi, 471-8571 (JP)
(74) Representative: J A Kemp LLP

(56) References cited:
- EP-A2- 3 309 532
- WO-A1-2023/218647
- US-A- 5 756 889
- US-A1- 2021 287 460

## Description

### BACKGROUND

### FIELD

The present disclosure relates to a vehicle inspection system and a method for controlling a vehicle inspection system.

### RELATED ART

Conventionally, known vehicles run autonomously or run by remote control (Japanese Translation of PCT International Application Publication No. JP-T-2017-538619).

A vehicle may be inspected by using inspection equipment, such as a drum tester and a brake tester, including a drum that rotates while supporting a wheel of the vehicle. In such inspection, driving force of the drum causes the wheel to rotate, and driving force of the wheel causes the drum to rotate. The inventors of the present application have found that, in a case of inspection of a vehicle by utilizing running of the vehicle by unmanned driving, difference between circumferential speed of a drum and circumferential speed of a wheel may cause the wheel to fall off from the drum. Falling of the wheel off from the drum may cause the vehicle to contact another object. Other examples of vehicle inspection systems are described in US2021/287460, WO2023/218647, EP3309532 and US5756889.

### SUMMARY

The present disclosure is achievable as the following aspects.
(1) In a preferred embodiment according to claim 1, a vehicle inspection system is provided. The vehicle inspection system includes a vehicle, inspection equipment, a sensor, a detection unit, and a control unit. The vehicle is runnable by unmanned driving. The inspection equipment includes a drum that rotates while supporting a wheel of the vehicle. The sensor outputs sensor information to detect falling of the wheel off from the drum. The detection unit uses the sensor information to detect falling of the wheel off from the drum. The control unit increases braking force of the vehicle when falling of the wheel off from the drum is detected. According to this aspect, in a case of inspection of the vehicle by utilizing running of the vehicle by unmanned driving, the detection unit can use the sensor information to detect falling of the wheel off from the drum of the inspection equipment. Then, when falling of the wheel off from the drum is detected, the control unit can increase braking force of the vehicle to decelerate or stop the vehicle. Accordingly, when the wheel falls off from the drum, the vehicle inspection system can reduce possibility of the vehicle contacting another object.
(2) The vehicle inspection system may further include an acquisition unit that acquires information on weight of the vehicle. The control unit may set the braking force to be caused when the wheel falls off from the drum larger as the weight of the vehicle increases. According to this aspect, the acquisition unit can acquire the weight information. The control unit sets braking force to be caused when the wheel falls off from the drum larger as the weight of the vehicle increases, and thus can increase the braking force of the vehicle. In this manner, the control unit can more surely decelerate or stop the vehicle. Accordingly, when the wheel falls off from the drum, the vehicle inspection system can further reduce possibility of the vehicle contacting another object.
(3) The sensor may include an acceleration sensor that measures acceleration of the vehicle and outputs the acceleration as the sensor information. The detection unit may use the acceleration to detect falling of the wheel off from the drum. According to this aspect, the detection unit can use the acceleration of the vehicle to detect falling of the wheel off from the drum.
(4) The sensor may include a steering angle sensor that measures an actual steering angle of the vehicle and outputs the actual steering angle as the sensor information. The detection unit may use the actual steering angle to detect falling of the wheel off from the drum. According to this aspect, the detection unit can use the actual steering angle of the vehicle to detect falling of the wheel off from the drum.
(5) The sensor may include a laser sensor that detects entering of an object into a predetermined detection range and outputs a detection result as the sensor information. The detection unit may use the detection result to detect falling of the wheel off from the drum. According to this aspect, the detection unit can use the detection result of the laser sensor to detect falling of the wheel off from the drum.
(6) The sensor may include a photoelectric sensor that irradiates a predetermined position with a ray of light to detect presence of an object on the ray of light and outputs a detection result as the sensor information. The detection unit may use the detection result to detect falling of the wheel off from the drum. According to this aspect, the detection unit can use the detection result of the photoelectric sensor to detect falling of the wheel off from the drum.
(7) The sensor may include a sensor capable of acquiring a position of the vehicle and that outputs the sensor information. The detection unit may use the position of the vehicle acquired by using the sensor information to detect falling of the wheel off from the drum. According to this aspect, the detection unit can use the position of the vehicle acquired by using the sensor information to detect falling of the wheel off from the drum.
(8) The vehicle inspection system may include a plurality of the sensors. The detection unit may use the sensor information output from each of the plurality of sensors to detect falling of the wheel off from the drum. According to this aspect, the detection unit can use the sensor information output from each of the plurality of sensors to detect falling of the wheel off from the drum. In this manner, the detection unit can more surely detect falling of the wheel off from the drum.
(9) According to another embodiment, a control method is provided. The control method includes a detection step and a control step. In the detection step, falling of a wheel of a vehicle runnable by unmanned driving off from a drum is detected by using sensor information output form a sensor. The drum rotates while supporting the wheel. In the control step, braking force of the vehicle is increased when falling of the wheel off from the drum is detected. According to this aspect, in a case of inspection of the vehicle by utilizing running of the vehicle by unmanned driving, in the detection step, the sensor information can be used to detect falling of the wheel off from the drum of inspection equipment. Then, when falling of the wheel off from the drum is detected, in the control step, braking force of the vehicle can be increased to decelerate or stop the vehicle. Accordingly, when the wheel falls off from the drum, the vehicle can have less possibility of contacting another object.

### BRIEF DESCRIPTION OF THE DRAWINGS

Fig. 1 is a conceptual diagram illustrating a configuration of a vehicle inspection system according to a first embodiment;
Fig. 2 is a block diagram illustrating a configuration of the vehicle inspection system according to the first embodiment;
Fig. 3 is a diagram illustrating a configuration of inspection equipment according to the first embodiment;
Fig. 4 is a flowchart illustrating a procedure for running control of a vehicle according to the first embodiment;
Fig. 5 is a flowchart illustrating a control method according to the first embodiment;
Fig. 6 is a block diagram illustrating a configuration of a vehicle inspection system according to a second embodiment;
Fig. 7 is a flowchart illustrating a control method according to the second embodiment;
Fig. 8 is a block diagram illustrating a configuration of a vehicle inspection system according to a third embodiment;
Fig. 9 is a flowchart illustrating a control method according to the third embodiment;
Fig. 10 is a block diagram illustrating a configuration of a vehicle inspection system according to a fourth embodiment;
Fig. 11 is a diagram illustrating a configuration of inspection equipment according to the fourth embodiment;
Fig. 12 is a flowchart illustrating a control method according to the fourth embodiment;
Fig. 13 is a block diagram illustrating a configuration of a vehicle inspection system according to a fifth embodiment;
Fig. 14 is a diagram illustrating a configuration of inspection equipment according to the fifth embodiment;
Fig. 15 is a flowchart illustrating a control method according to the fifth embodiment;
Fig. 16 is a block diagram illustrating a configuration of a vehicle inspection system according to a sixth embodiment;
Fig. 17 is a flowchart illustrating a control method according to the sixth embodiment;
Fig. 18 is an explanatory diagram illustrating a schematic configuration of a vehicle inspection system according to a seventh embodiment;
Fig. 19 is a flowchart illustrating a procedure for running control of a vehicle according to the seventh embodiment; and
Fig. 20 is a flowchart illustrating a control method according to the seventh embodiment.

### DETAILED DESCRIPTION

### A. First Embodiment

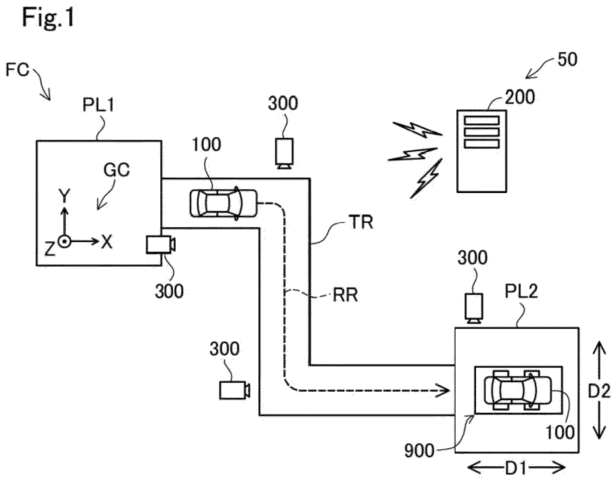

Fig. 1 is a conceptual diagram illustrating a configuration of a vehicle inspection system 50 according to a first embodiment. The vehicle inspection system 50 includes one or more vehicles 100 as a moving object, a server 200, one or more external sensors 300, a detection sensor 700, and inspection equipment 900.

In the present disclosure, the "moving object" means an object capable of moving, and is a vehicle or an electric vertical takeoff and landing aircraft (so-called flying-automobile), for example. The vehicle may be a vehicle to run with a wheel 190 or may be a vehicle to run with a continuous track, and may be a passenger car, a truck, a bus, a two-wheel vehicle, a four-wheel vehicle, a construction vehicle, or a combat vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a truck, a bus, a two-wheel vehicle, a four-wheel vehicle, a construction vehicle, or a combat vehicle , for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

In the present specification, the "remote control" includes "complete remote control" by which all motions of the vehicle 100 are completely determined from outside the vehicle 100, and "partial remote control" by which some of the motions of the vehicle 10 are determined from outside the vehicle 100. The "autonomous control" includes "complete autonomous control" by which the vehicle 100 controls a motion of the vehicle 100 autonomously without receiving any information from a device outside the vehicle 10, and "partial autonomous control" by which the vehicle 100 controls a motion of the vehicle 100 autonomously using information received from a device outside the vehicle 100.

In this embodiment, the vehicle inspection system 50 is used, in a factory FC where the vehicle 100 is produced, to inspect the produced vehicle 100. That is, in this embodiment, the vehicle inspection system 50 is used for new inspection of the vehicle 100. The new inspection is defined in the Road Transport Vehicle Act and is inspection performed to newly use the vehicle 100. The new inspection is also referred to as completion inspection. A reference coordinate system in the factory FC is a global coordinate system GC, and any position in the factory FC can be represented by X, Y, and Z coordinates in the global coordinate system GC. The factory FC includes a first place PL1 and a second place PL2. The first place PL1 and the second place PL2 are connected to one another through a track TR on which the vehicle 100 is runnable. In the factory FC, a plurality of external sensors 300 is disposed along the track TR. Positions of the respective external sensors 300 in the factory FC are adjusted in advance. The vehicle 100 moves by unmanned driving from the first place PL1 to the second place PL2 through the track TR. The inspection equipment 900 installed at the second place PL2 is used to inspect the vehicle 100.

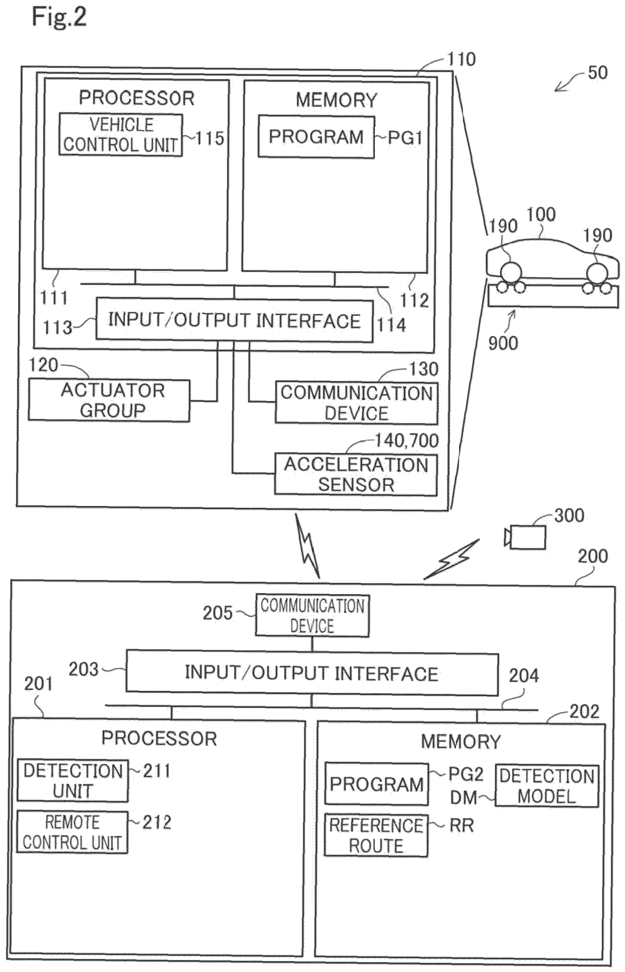

Fig. 2 is a block diagram illustrating a configuration of the vehicle inspection system 50 according to the first embodiment. The vehicle 100 includes a vehicle control device 110 to control each part of the vehicle 100, an actuator group 120 including one or more actuators that perform driving under control of the vehicle control device 110, and a communication device 130 to communicate with an external device, such as the server 200, by wireless communication.

The vehicle control device 110 includes a computer including a processor 111, a memory 112, an input/output interface 113, and an internal bus 114. The processor 111, the memory 112, and the input/output interface 113 are coupled to one another via the internal bus 114 in a bidirectionally communicable manner. The actuator group 120 and the communication device 130 are coupled to the input/output interface 113. The processor 111 executes a program PG1 stored in the memory 112, thus implementing various functions including a function as a vehicle control unit 115.

The vehicle control unit 115 controls the actuator group 120 to cause the vehicle 100 to run. The vehicle control unit 115 uses a running control signal received from the server 200 to control the actuator group 120, and thus can cause the vehicle 100 to run. The running control signal is a control signal to cause the vehicle 100 to run. In this embodiment, the running control signal includes, as parameters, acceleration and a steering angle of the vehicle 100. In another embodiment, the running control signal may include, alternative to or in addition to the acceleration of the vehicle 100, speed of the vehicle 100 as a parameter.

The actuator group 120 includes an actuator of a driving device, an actuator of a steering device, and an actuator of a braking device. The driving device is used to accelerate the vehicle 100. The steering device is used to change a traveling direction of the vehicle 100. The braking device is used to decelerate the vehicle 100. The actuator of the braking device is, for example, a hydraulic actuator. During execution of unmanned driving control, the actuator of the braking device is adjusted to have a brake hydraulic pressure in accordance with negative acceleration indicated by the running control signal. The negative acceleration is also referred to as deceleration. The actuator of the braking device is coupled to the braking device, such as a disc brake device, via a channel through which brake fluid is supplied. Accordingly, controlling the actuator of the braking device applies braking force to each wheel 190 in accordance with negative acceleration indicated by the running control signal.

The detection sensor 700 outputs sensor information to detect falling of the wheel 190 off from a drum 91. The sensor information is, for example, information on operation of the vehicle 100. Examples of the information on operation of the vehicle 100 include information indicating physical quantity related to the vehicle 100, behavior of the wheel 190 on the drum 91, and displacement of a positioning point 101 of the vehicle 100. In this embodiment, the detection sensor 700 is an acceleration sensor 140 installed on the vehicle 100. The acceleration sensor 140 measures acceleration applied to the vehicle 100 and outputs the acceleration of the vehicle 100 as the sensor information. The acceleration sensor 140 is, for example, a 1-axis acceleration sensor capable of measuring acceleration applied to the vehicle 100 in a front-rear direction D1. In this case, the acceleration sensor 140 is attached to the vehicle 100 in such a manner that a shaft of the sensor runs in the front-rear direction D1 of the vehicle 100.

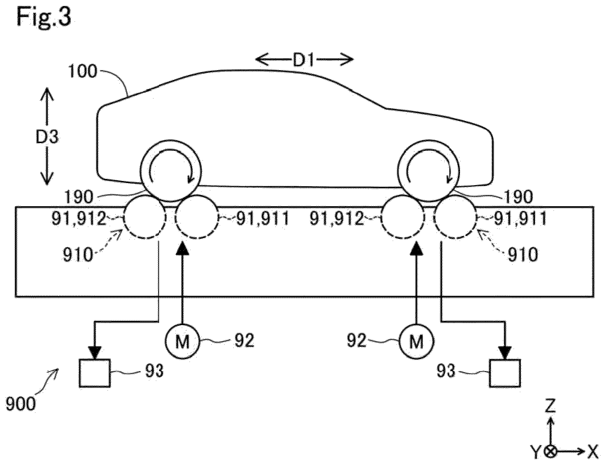

Fig. 3 is a diagram illustrating a configuration of the inspection equipment 900 according to the first embodiment. The inspection equipment 900 includes the drum 91, a motor 92, and a circumferential speed sensor 93.

The drum 91 rotates while supporting the wheel 190. The drum 91 is also referred to as a roller. The drum 91 is rotatable centering on a center axis extending in a left-right direction D2 of the vehicle 100. In this embodiment, a drum unit 910 including a plurality of drums 91 is provided for each wheel 190. The drum unit 910 according to this embodiment includes a primary drum 911 and a secondary drum 912 as the drums 91 capable of sandwiching the wheel 190 therebetween. The primary drum 911 and the secondary drum 912 are disposed to be opposed to one another in the front-rear direction D1 of the vehicle 100. For example, in a case in which the vehicle 100 is a four-wheeled vehicle, the inspection equipment 900 includes four drum units 910 in total, including a first front drum unit, a second front drum unit, a first rear drum unit, and a second rear drum unit. Thereby, in this case, the inspection equipment 900 includes eight drums 91 in total. Each of the primary drum 911 and the secondary drum 912 of the first front drum unit rotates while supporting a left front wheel of the vehicle 100. Each of the primary drum 911 and the secondary drum 912 of the second front drum unit rotates while supporting a right front wheel of the vehicle 100. Each of the primary drum 911 and the secondary drum 912 of the first rear drum unit rotates while supporting a left rear wheel of the vehicle 100. Each of the primary drum 911 and the secondary drum 912 of the second rear drum unit rotates while supporting a right rear wheel of the vehicle 100. Below, when it is not necessary to distinguish the primary drum 911 and the secondary drum 912 from each other, they are simply referred to as the "drum 91".

The motor 92 rotates the drum 91. In this embodiment, the motor 92 is provided for each drum 91. The circumferential speed sensor 93 detects circumferential speed of the drum 91. A unit for the circumferential speed of the drum 91 is, for example, km/h. In this embodiment, the circumferential speed sensor 93 is provided for each drum 91.

In inspection using the inspection equipment 900, the vehicle 100 is inspected while the wheel 190 is present on the drum 91. The inspection equipment 900 is, for example, a brake tester. The brake tester is used to inspect brake performance of the vehicle 100. In inspection using the brake tester, for example, the brake tester rotates the wheel 190 by driving force of the drum 91 while a shift position of the vehicle 100 is set to a neutral range. Then, the vehicle 100 applies predetermined braking force to each wheel 190 to reduce circumferential speed of the wheel 190. A unit for the circumferential speed of the wheel 190 is, for example, km/h. Thereby, braking force of the braking device is inspected. When both of the inspection equipment 900 and the vehicle 100 operate normally, the circumferential speed of the wheel 190 increases as the circumferential speed of the drum 91 increases with driving force of the drum 91. The circumferential speed of the drum 91 decreases as the circumferential speed of the wheel 190 decreases with braking force of the vehicle 100. That is, during inspection in which the wheel 190 is rotated by driving force of the drum 91, the circumferential speed of the drum 91 is linked to the circumferential speed of the wheel 190.

Moreover, the inspection equipment 900 may be, for example, a drum tester. The drum tester is used to inspect power performance of the vehicle 100. In inspection using the drum tester, for example, the vehicle 100 causes the drum 91 to rotate at predetermined circumferential speed by driving force of the wheel 190 while a shift position of the vehicle 100 is set to a drive range. Then, based on difference between running speed of the vehicle 100 calculated by using circumferential speed of the drum 91 output from the circumferential speed sensor 93 and speed displayed on a speedometer, an error of the speedometer with respect to the actual running speed of the vehicle 100 is inspected. When both of the inspection equipment 900 and the vehicle 100 operate normally, the circumferential speed of the drum 91 increases as the circumferential speed of the wheel 190 increases with driving force of the wheel 190. The circumferential speed of the drum 91 decreases as the circumferential speed of the wheel 190 decreases. That is, during inspection in which the drum 91 is rotated by driving force of the wheel 190, the circumferential speed of the drum 91 is linked to the circumferential speed of the wheel 190.

Note that the inspection equipment 900 may be equipment that achieves both functions of the brake tester and the drum tester by integration of the brake tester and the drum tester. Moreover, application of the inspection equipment 900 is not limited to those described above. For example, the brake tester as the inspection equipment 900 may be used to inspect operation of an anti-lock brake system.

Here, during inspection in which the drum 91 is rotated by driving force of the wheel 190, when the drum 91 is locked and rotation of the drum 91 stops, the circumferential speed of the wheel 190 may be higher than the circumferential speed of the drum 91. Moreover, during inspection in which the wheel 190 is rotated by driving force of the drum 91, when the wheel 190 is locked and rotation of the wheel 190 stops, the circumferential speed of the drum 91 may be higher than the circumferential speed of the wheel 190. Furthermore, during inspection in which the wheel 190 is rotated by driving force of the drum 91, when braking force larger than the predetermined braking force is applied to the wheel 190, the circumferential speed of the wheel 190 may be lower than scheduled. At this time, the circumferential speed of the drum 91 may be maintained at predetermined circumferential speed. When the circumferential speed of the wheel 190 is lower than scheduled and the circumferential speed of the drum 91 is maintained at the predetermined circumferential speed, the circumferential speed of the drum 91 may be higher than the circumferential speed of the wheel 190. In addition, during inspection in which the wheel 190 is rotated by driving force of the drum 91, when the shift position of the vehicle 100 is unintendedly switched from the neutral range to a parking range, the circumferential speed of the wheel 190 may be lower than scheduled. At this time, the circumferential speed of the drum 91 may be maintained at the predetermined circumferential speed. When the circumferential speed of the wheel 190 is lower than scheduled and the circumferential speed of the drum 91 is maintained at the predetermined circumferential speed, the circumferential speed of the drum 91 may be higher than the circumferential speed of the wheel 190. Furthermore, during inspection in which the wheel 190 is rotated by driving force of the drum 91, when the shift position of the vehicle 100 is unintendedly switched from the neutral range to the drive range, the circumferential speed of the wheel 190 may be higher than scheduled. At this time, the circumferential speed of the drum 91 may be maintained at the predetermined circumferential speed. When the circumferential speed of the wheel 190 is higher than scheduled and the circumferential speed of the drum 91 is maintained at the predetermined circumferential speed, the circumferential speed of the wheel 190 may be higher than the circumferential speed of the drum 91. In this manner, difference may be caused between the circumferential speed of the drum 91 and the circumferential speed of the wheel 190. Difference between the circumferential speed of the drum 91 and the circumferential speed of the wheel 190 may cause falling of the wheel 190 off from the drum 91. Falling of the wheel 190 off from the drum 91 may cause the vehicle 100 to contact another object.

With regard to this, when the server 200 detects falling of the wheel 190 off from the drum 91, the server 200 increases braking force of the vehicle 100 to decelerate the vehicle 100 by remote control. Accordingly, the server 200 reduces possibility of the vehicle 100 contacting another object. Note that the case in which the wheel 190 falls off from the drum 91 includes at least one of a case in which the wheel 190 falls off from the drum 91 in the front-rear direction D1 of the vehicle 100, and a case in which the wheel 190 falls off from the drum 91 in the left-right direction D2 of the vehicle 100.

As illustrated in Fig. 2, the server 200 includes a computer including a processor 201, a memory 202, an input/output interface 203, and an internal bus 204. The processor 201, the memory 202, and the input/output interface 203 are coupled to one another via the internal bus 204 in a bidirectionally communicable manner. A communication device 205 to communicate with various devices located outside of the server 200 is coupled to the input/output interface 203. The communication device 205 can communicate with the vehicle 100 by wireless communication and communicate with each external sensor 300 by wired or wireless communication. The processor 201 executes a program PG2 stored in the memory 202, thus implementing various functions including functions as a detection unit 211 and a remote control unit 212.

The detection unit 211 uses the sensor information output from the detection sensor 700 to detect falling of the wheel 190 off from the drum 91. In this embodiment, the detection unit 211 uses, as the sensor information, acceleration of the vehicle 100 output from the acceleration sensor 140 installed on the vehicle 100 to detect falling of the wheel 190 off from the drum 91. Specifically, the detection unit 211 detects that the wheel 190 falls off from the drum 91 when the acceleration of the vehicle 100 is equal to or more than a predetermined first threshold. The first threshold can be experimentally or empirically determined in advance. Note that the detection unit 211 may further output the detection of falling of the wheel 190 from an output device not illustrated. Examples of the output device include a display device, such as a monitor, and a notification device, such as a speaker.

The remote control unit 212 acquires a detection result of the external sensor 300 and uses the detection result to generate the running control signal to control the actuator group 120 of the vehicle 100. The remote control unit 212 then transmits the running control signal to the vehicle 100 to cause the vehicle 100 to run by remote control. In addition, when falling of the wheel 190 off from the drum 91 is detected, the remote control unit 212 generates the running control signal to increase braking force of the vehicle 100, and transmits the running control signal to the vehicle 100. Accordingly, the remote control unit 212 decelerates the vehicle 100 by remote control. The remote control unit 212 may generate and output not only the running control signal but also control signals to control, for example, actuators that cause various auxiliary machines and various types of equipment including a wiper, a power window, and a light provided to the vehicle 100 to operate. That is, the remote control unit 212 may cause these various types of equipment and auxiliary machines to operate by remote control.

The external sensor 300 is a sensor located outside of the vehicle 100. In this embodiment, the external sensor 300 is a sensor that captures the vehicle 100 from outside of the vehicle 100. The external sensor 300 includes a communication device (not illustrated) and can communicate with another device, such as the server 200, by wired or wireless communication.

Specifically, the external sensor 300 includes a camera. The camera as the external sensor 300 images the vehicle 100 and outputs the captured image as a detection result.

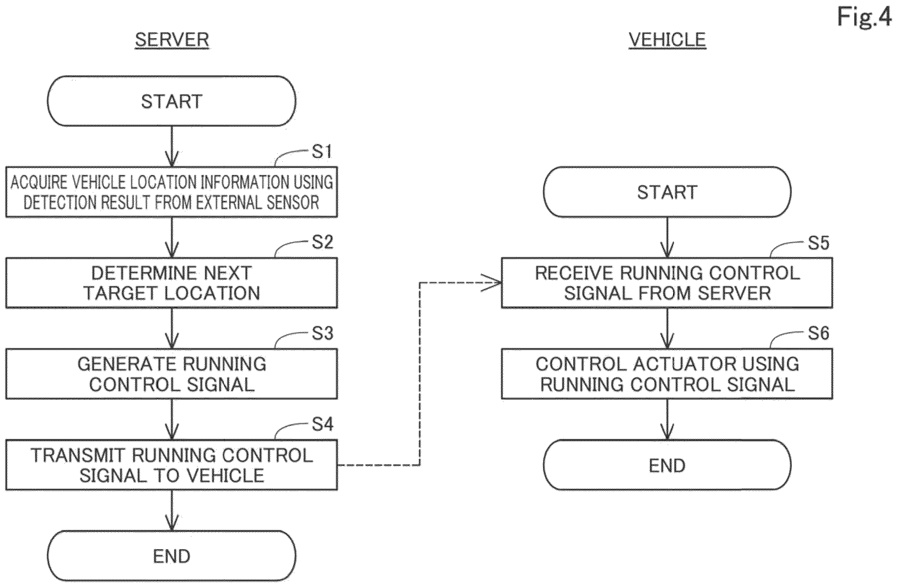

Fig. 4 is a flowchart illustrating a procedure for running control of the vehicle 100 according to the first embodiment. In the procedure in Fig. 4, the processor 201 of the server 200 executes the program PG2, thus functioning as the remote control unit 212. Moreover, the processor 111 of the vehicle 100 executes the program PG1, thus functioning as the vehicle control unit 115.

At Step S1, the processor 201 of the server 200 uses the detection result output from the external sensor 300 to acquire vehicle position information. The vehicle location information is locational information as a basis for generating a running control signal. In the present embodiment, the vehicle location information includes the location and orientation of the vehicle 100 in a global coordinate system GC of the factory FC. Specifically, in step S1 , the processor 201 acquires vehicle position information using a captured image acquired by a camera, which is the external sensor 300 .

More specifically, in step S1, the processor 201 for example, determines the outer shape of the vehicle 100 from the captured image, calculates the coordinates of a positioning point 101 of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the vehicle inspection system 50 or outside the vehicle inspection system 50. The detection model DM is stored in advance in a memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The server 200 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 202 the server 200 determines a target location to which the vehicle 100 is to move next. In the present embodiment, the target location is expressed by X, Y, and Z coordinates in the global coordinate system. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 200 determines the target location on the reference route ahead of a current location of the vehicle 100.

In step S3, the processor 201 of the server 200 generates a running control signal for causing the vehicle 100 to run toward the determined target location. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the server 200 generally determines an acceleration in such a manner as to decelerate the vehicle 100. If the vehicle 100 is on the reference route, server 200 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 of the server 200 transmits the generated running control signal to the vehicle 100. The server 200 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the system 50 in the present embodiment, it becomes possible to move the vehicle 100 without using a transport unit such as a crane or a conveyor.

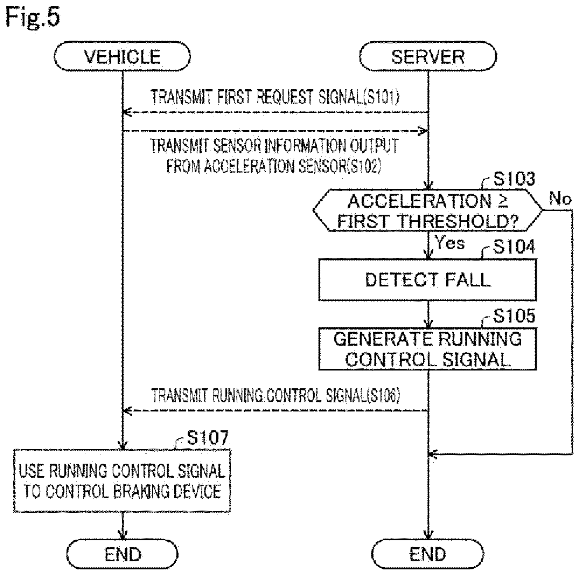

Fig. 5 is a flowchart illustrating a method for controlling the vehicle inspection system 50 according to the first embodiment. In the procedure in Fig. 5, the processor 201 of the server 200 executes the program PG2, thus functioning as the detection unit 211 and the remote control unit 212. Moreover, the processor 111 of the vehicle 100 executes the program PG1, thus functioning as the vehicle control unit 115. For example, the control method illustrated in Fig. 5 is repetitively executed at predetermined intervals in a period from a start to an end of inspection using the inspection equipment 900.

At Step S101, the processor 201 of the server 200 transmits to the vehicle 100 a first request signal to acquire the sensor information output from the acceleration sensor 140. At Step S102, the processor 111 of the vehicle 100 that has received the first request signal transmits to the server 200 the sensor information output from the acceleration sensor 140. If the acceleration of the vehicle 100 is less than the first threshold (Step S103: No), the processor 201 of the server 200 ends this flow. On the other hand, if the acceleration of the vehicle 100 is equal to or more than the first threshold (Step S103: Yes), at Step S104, the processor 201 of the server 200 detects that the wheel 190 falls off from the drum 91. At Step S105, the processor 201 of the server 200 generates the running control signal to increase braking force of the vehicle 100. Specifically, in a case in which braking force at the time of detection of falling of the wheel 190 off from the drum 91 is zero, such as a case in which falling of the wheel 190 off from the drum 91 is detected during inspection of power performance of the vehicle 100, the processor 201 of the server 200 behaves as follows. In this case, the processor 201 of the server 200 increases braking force of the vehicle 100 from zero. Moreover, in a case in which braking force at the time of detection of falling of the wheel 190 off from the drum 91 is not zero, such as a case in which falling of the wheel 190 off from the drum 91 is detected during inspection of brake performance of the vehicle 100, the processor 201 of the server 200 behaves as follows. In this case, the processor 201 of the server 200 generates the running control signal to increase braking force of the vehicle 100 from the current braking force. The current braking force is, for example, calculated based on the latest running control signal transmitted from the server 200 to the vehicle 100. At Step S106, the processor 201 of the server 200 transmits the generated running control signal to the vehicle 100. At Step S107, the processor 111 of the vehicle 100 that has received the running control signal uses the received running control signal to control the braking device and thereby decelerates the vehicle 100.

According to the first embodiment, in a case of inspection of the vehicle 100 by utilizing running of the vehicle 100 by unmanned driving, the detection unit 211 of the server 200 can use the sensor information to detect falling of the wheel 190 off from the drum 91 of the inspection equipment 900. Then, when falling of the wheel 190 off from the drum 91 is detected, the remote control unit 212 of the server 200 generates the running control signal to increase braking force of the vehicle 100 and transmits the generated running control signal to the vehicle 100, and thereby can decelerate the vehicle 100. Accordingly, when the wheel 190 falls off from the drum 91, the vehicle inspection system 50 can reduce, by remote control, possibility of the vehicle 100 contacting another object.

Moreover, according to the first embodiment, execution of a detection step and a control step in this order enables the vehicle 100 to decelerate when falling of the wheel 190 off from the drum 91 is detected. Accordingly, when the wheel 190 falls off from the drum 91, the vehicle 100 can have less possibility of contacting another object. Note that the detection step is a step to detect falling of the wheel 190 off from the drum 91 by using the sensor information output form the detection sensor 700. The drum 91 rotates while supporting the wheel 190 of the vehicle 100 that is runnable by unmanned driving. The detection step corresponds to Steps S101 to S104 in Fig. 5. The control step is a step to increase braking force of the vehicle 100 when falling of the wheel 190 off from the drum 91 is detected. The control step corresponds to Steps S105 to S107 in Fig. 5.

Moreover, according to the first embodiment, the vehicle inspection system 50 includes the acceleration sensor 140 as the detection sensor 700. When the acceleration of the vehicle 100 is equal to or more than the first threshold, the detection unit 211 can detect that the wheel 190 falls off from the drum 91. That is, the detection unit 211 can use the acceleration of the vehicle 100 to detect falling of the wheel 190 off from the drum 91.

Moreover, according to the first embodiment, the detection sensor 700 may be a 1-axis acceleration sensor capable of measuring acceleration applied in the front-rear direction D1 of the vehicle 100. In such an embodiment, the detection unit 211 can more surely detect falling of the wheel 190 off from the drum 91 in the front-rear direction D1 of the vehicle 100.

Note that the acceleration sensor 140 may be a 1-axis acceleration sensor capable of measuring acceleration applied in the left-right direction D2 of the vehicle 100. In such an embodiment, the detection unit 211 can more surely detect falling of the wheel 190 off from the drum 91 in the left-right direction D2 of the vehicle 100. Alternatively, the acceleration sensor 140 may be a 2-axis acceleration sensor capable of measuring acceleration applied in two directions among the front-rear direction D1, the left-right direction D2, and an up-down direction D3 of the vehicle 100. In such an embodiment, the detection unit 211 can more surely detect falling of the wheel 190 off from the drum 91. Alternatively, the acceleration sensor 140 may be a 3-axis acceleration sensor capable of measuring acceleration applied in three directions of the front-rear direction D1, the left-right direction D2, and the up-down direction D3 of the vehicle 100. In such an embodiment, the detection unit 211 can further more surely detect falling of the wheel 190 off from the drum 91.

Moreover, according to the first embodiment, the detection unit 211 can use the sensor information output from the detection sensor 700 installed on the vehicle 100 in advance to detect falling of the wheel 190 off from the drum 91. Accordingly, the vehicle inspection system 50 can detect falling of the wheel 190 off from the drum 91 without the detection sensor 700 being disposed purposely outside of the vehicle 100. This can suppress installation costs of the vehicle inspection system 50.

### B. Second Embodiment

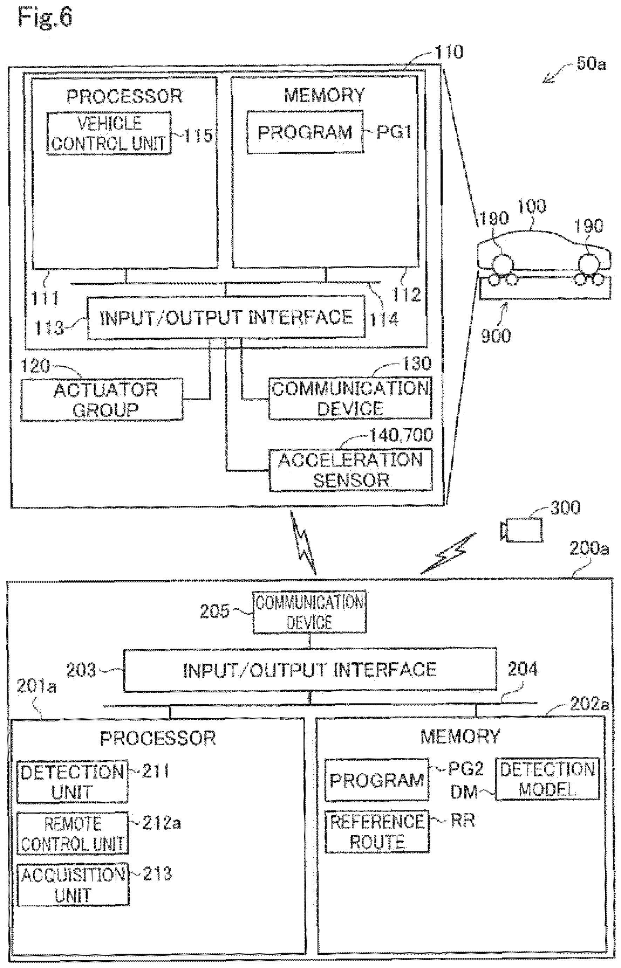

Fig. 6 is a block diagram illustrating a configuration of a vehicle inspection system 50a according to a second embodiment. In this embodiment, a configuration of a server 200a is different from that of the first embodiment. Other configurations are the same as those of the first embodiment unless otherwise described. Configurations similar to those of the first embodiment are denoted by the same reference characters, and description thereof is omitted.

A processor 201a of the server 200a executes the program PG2 stored in a memory 202a, thus implementing various functions including functions as the detection unit 211, an acquisition unit 213, and a remote control unit 212a.

The acquisition unit 213 acquires weight information on weight of the vehicle 100. The weight information is, for example, a weight value indicating weight of the vehicle 100 with a numerical value. The weight information may be classification information indicating classification in accordance with weight of the vehicle 100. The classification information is data indicating one group of a vehicle-type group in classification with a plurality of vehicle types put in one group. In this embodiment, the acquisition unit 213 acquires from the vehicle 100 the weight information stored in the memory 112 of the vehicle control device 110. Note that the acquisition unit 213 may acquire the weight information in another method. For example, in a case in which a first database where a vehicle identification number, such as a VIN number, and a weight value are associated with one another is stored in the memory 202a of the server 200a, the acquisition unit 213 may acquire the weight information as follows. In this case, the acquisition unit 213 acquires from the vehicle 100 the vehicle identification number stored in the memory 112 of the vehicle control device 110. Then, in the first database, the acquisition unit 213 acquires the weight value associated with the vehicle identification number acquired from the vehicle 100. Accordingly, the acquisition unit 213 acquires the weight value as the weight information. Moreover, in a case in which a second database where vehicle-type information indicating a vehicle type and the classification information are associated with one another is stored in the memory 202a of the server 200a, the acquisition unit 213 may acquire the weight information as follows. In this case, the acquisition unit 213 uses the detection result output from the external sensor 300 to identify the vehicle type. Then, in the second database, the acquisition unit 213 acquires the classification information associated with the vehicle-type information indicating the vehicle type acquired from the vehicle 100. Accordingly, the acquisition unit 213 acquires the classification information as the weight information.

When falling of the wheel 190 off from the drum 91 is detected, the remote control unit 212a generates the running control signal to apply braking force in accordance with the weight of the vehicle 100 and transmits the generated running control signal to the vehicle 100. At this time, the remote control unit 212a sets braking force to be caused when the wheel 190 falls off from the drum 91 larger as the weight of the vehicle 100 increases. Accordingly, the remote control unit 212a increases braking force of the vehicle 100 caused when the wheel 190 falls off from the drum 91 as the weight of the vehicle 100 increases.

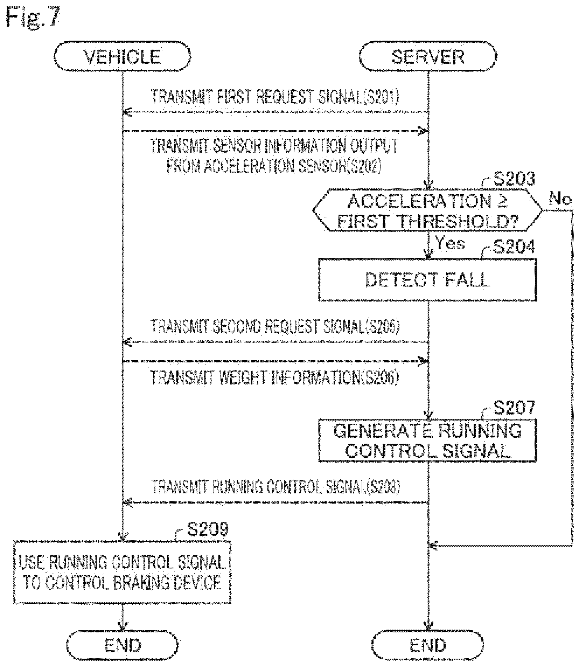

Fig. 7 is a flowchart illustrating a method for controlling the vehicle inspection system 50a according to the second embodiment. In the procedure in Fig. 7, the processor 201a of the server 200a executes the program PG2, thus functioning as the detection unit 211, the remote control unit 212a, and the acquisition unit 213. Moreover, the processor 111 of the vehicle 100 executes the program PG1, thus functioning as the vehicle control unit 115. For example, the control method illustrated in Fig. 7 is repetitively executed at predetermined intervals in a period from a start to an end of inspection using the inspection equipment 900.

At Step S201, the processor 201a of the server 200a transmits to the vehicle 100 the first request signal to acquire the sensor information output from the acceleration sensor 140. At Step S202, the processor 111 of the vehicle 100 that has received the first request signal transmits to the server 200a the sensor information output from the acceleration sensor 140. If the acceleration of the vehicle 100 is less than the first threshold (Step S203: No), the processor 201a of the server 200a ends this flow. On the other hand, if the acceleration of the vehicle 100 is equal to or more than the first threshold (Step S203: Yes), at Step S204, the processor 201a of the server 200a detects that the wheel 190 falls off from the drum 91. At Step S205, the processor 201a of the server 200a transmits to the vehicle 100 a second request signal to acquire the weight information. At Step S206, the processor 111 of the vehicle 100 that has received the second request signal transmits to the server 200a the weight information stored in the memory 112 of the vehicle control device 110. At Step S207, the processor 201a of the server 200a generates the running control signal to increase braking force in accordance with the weight of the vehicle 100. At Step S208, the processor 201a of the server 200a transmits the generated running control signal to the vehicle 100. At Step S209, the processor 111 of the vehicle 100 that has received the running control signal uses the received running control signal to control the braking device and thereby decelerates the vehicle 100.

According to the second embodiment, when falling of the wheel 190 off from the drum 91 is detected, the acquisition unit 213 can acquire the weight information. The remote control unit 212a sets braking force to be caused when the wheel 190 falls off from the drum 91 larger as the weight of the vehicle 100 increases, and thus can increase braking force of the vehicle 100. In such an embodiment, when falling of the wheel 190 off from the drum 91 is detected, the remote control unit 212a can more surely decelerate the vehicle 100. Accordingly, when the wheel 190 falls off from the drum 91, the vehicle inspection system 50a can further reduce possibility of the vehicle 100 contacting another object.

### C. Third Embodiment

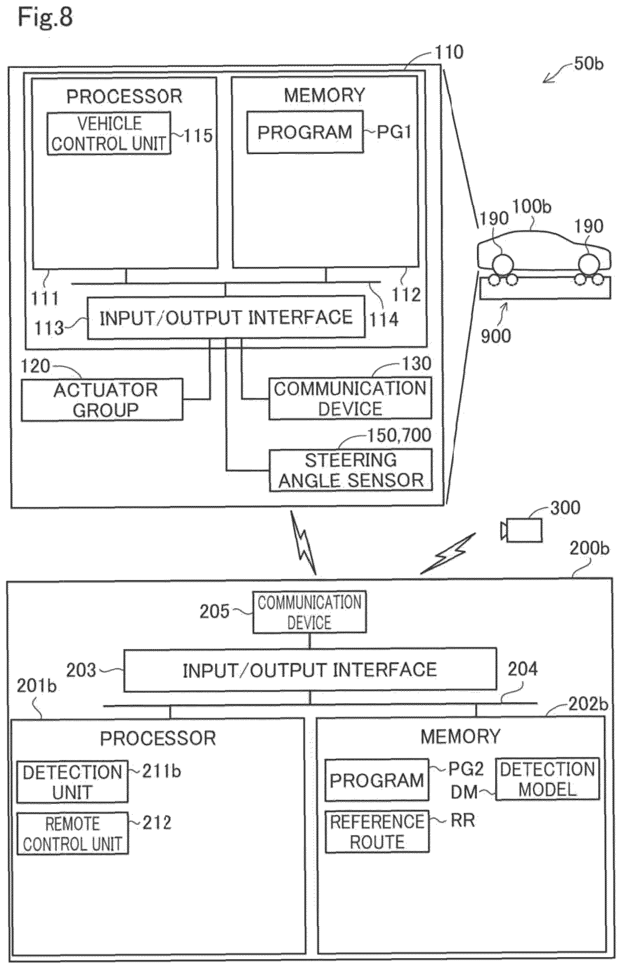

Fig. 8 is a block diagram illustrating a configuration of a vehicle inspection system 50b according to a third embodiment. In this embodiment, a configuration of a vehicle 100b and a configuration of a server 200b are different from those of the first embodiment. Other configurations are the same as those of the first embodiment unless otherwise described. Configurations similar to those of the first embodiment are denoted by the same reference characters, and description thereof is omitted.

The vehicle 100b includes a steering angle sensor 150 as the detection sensor 700. The steering angle sensor 150 measures an actual steering angle of the vehicle 100b and outputs the actual steering angle of the vehicle 100b as the sensor information.

A processor 201b of the server 200b executes the program PG2 stored in a memory 202b, thus implementing various functions including functions as a detection unit 211b and the remote control unit 212. The detection unit 211b uses, as the sensor information, the actual steering angle of the vehicle 100 output from the steering angle sensor 150 installed on the vehicle 100b to detect falling of the wheel 190 off from the drum 91. Specifically, the detection unit 211b detects that the wheel 190 falls off from the drum 91 when a running trajectory of the vehicle 100b defined by the actual steering angle of the vehicle 100b is out of a predetermined trajectory range. For example, the running trajectory of the vehicle 100b can be generated by arranging, in time series, actual steering angles of the vehicle 100b acquired at a plurality of different timings. The trajectory range of the running trajectory of the vehicle 100b can be experimentally or empirically determined in advance.

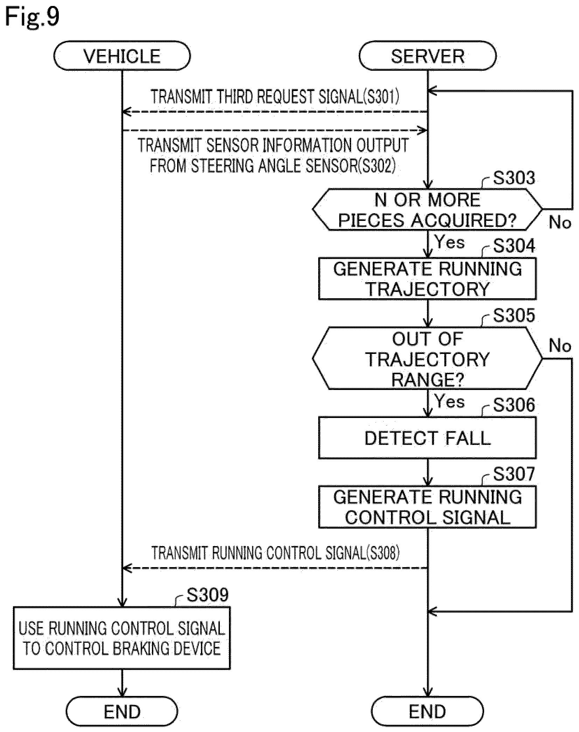

Fig. 9 is a flowchart illustrating a method for controlling the vehicle inspection system 50b according to the third embodiment. In the procedure in Fig. 9, the processor 201b of the server 200b executes the program PG2, thus functioning as the detection unit 211b and the remote control unit 212. Moreover, the processor 111 of the vehicle 100b executes the program PG1, thus functioning as the vehicle control unit 115. For example, the control method illustrated in Fig. 9 is repetitively executed at predetermined intervals in a period from a start to an end of inspection using the inspection equipment 900.

At Step S301, the processor 201b of the server 200b transmits to the vehicle 100b a third request signal to acquire the sensor information output from the steering angle sensor 150. At Step S302, the processor 111 of the vehicle 100b that has received the third request signal transmits to the server 200b the sensor information output from the steering angle sensor 150. Step S301 and Step S302 are repetitively executed in this order for a period until the server 200b acquires from the vehicle 100b predetermined N (N is an integer of 2 or more) or more pieces of the sensor information. If the server 200b acquires N or more pieces of the sensor information from the vehicle 100b (Step S303: Yes), at Step S304, the processor 201b of the server 200b generates the running trajectory of the vehicle 100b. If the running trajectory of the vehicle 100b is not out of the predetermined trajectory range (Step S305: No), the processor 201b of the server 200b ends this flow. On the other hand, if the running trajectory of the vehicle 100b is out of the predetermined trajectory range (Step S305: Yes), at Step S306, the processor 201b of the server 200b detects that the wheel 190 falls off from the drum 91. At Step S307, the processor 201b of the server 200b generates the running control signal to increase braking force of the vehicle 100b. At Step S308, the processor 201b of the server 200b transmits the generated running control signal to the vehicle 100b. At Step S309, the processor 111 of the vehicle 100b that has received the running control signal uses the received running control signal to control the braking device and thereby decelerates the vehicle 100b.

According to the third embodiment, the vehicle inspection system 50b includes the steering angle sensor 150 as the detection sensor 700. When the running trajectory of the vehicle 100b defined by the actual steering angle of the vehicle 100b is out of the predetermined trajectory range, the detection unit 211b can detect that the wheel 190 falls off from the drum 91. That is, the detection unit 211b can use the actual steering angle of the vehicle 100b to detect falling of the wheel 190 off from the drum 91.

### D. Fourth Embodiment

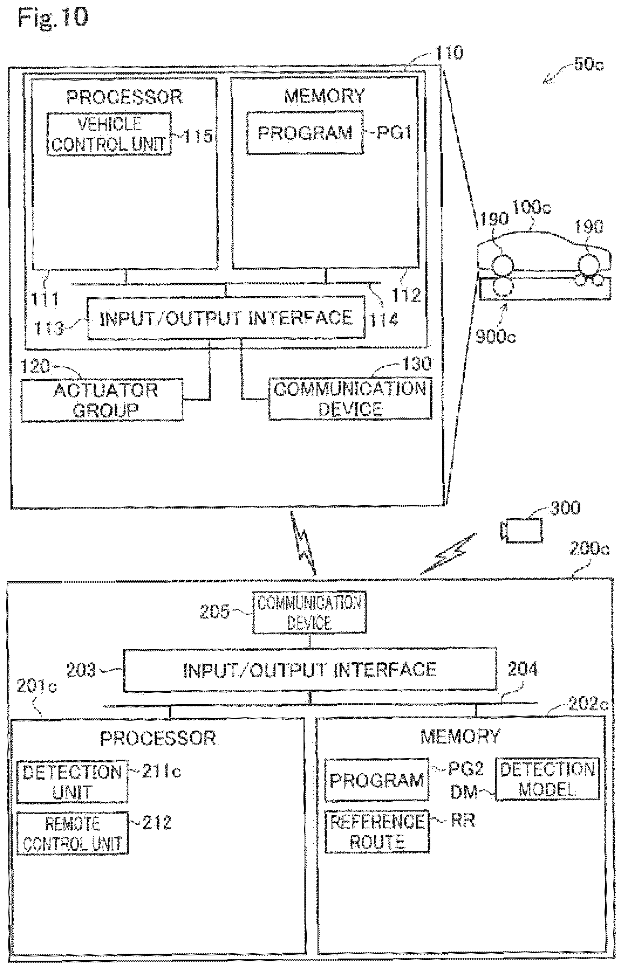

Fig. 10 is a block diagram illustrating a configuration of a vehicle inspection system 50c according to a fourth embodiment. In this embodiment, a configuration of inspection equipment 900c, a configuration of a vehicle 100c, and a configuration of a server 200c are different from those of the first embodiment. Other configurations are the same as those of the first embodiment unless otherwise described. Configurations similar to those of the first embodiment are denoted by the same reference characters, and description thereof is omitted.

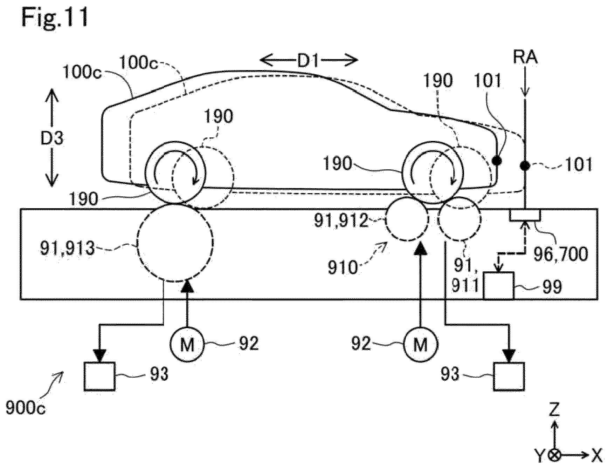

Fig. 11 is a diagram illustrating a configuration of the inspection equipment 900c according to the fourth embodiment. In Fig. 11, the vehicle 100c with the wheel 190 not falling off from the drum 91 is indicated by a solid line, and the vehicle 100c with the wheel 190 falling off from the drum 91 is indicated by a broken line.

In this embodiment, the drum unit 910 including two drums 91 of the primary drum 911 and the secondary drum 912 is provided for each wheel 190 of front wheels of the vehicle 100c. A single drum 913 as one drum 91 is provided for each wheel 190 of rear wheels of the vehicle 100c. For example, in a case in which the vehicle 100c is a four-wheeled vehicle, the inspection equipment 900c includes six drums 91 in total, including the first front drum unit, the second front drum unit, a first rear single drum, and a second rear single drum. Configurations of the first front drum unit and the second front drum unit are similar to those of the first embodiment. The first rear single drum rotates while supporting the left rear wheel of the vehicle 100c. The second rear single drum rotates while supporting the right rear wheel of the vehicle 100c. Below, when it is not necessary to distinguish the primary drum 911, the secondary drum 912, and the single drum 913, they are simply referred to as the "drum 91".

The inspection equipment 900c includes a laser sensor 96 as the detection sensor 700. The laser sensor 96 detects entering of an object into a predetermined detection range RA and outputs a detection result as the sensor information. The laser sensor 96 is installed at a position where falling of the wheel 190 off from the drum 91 is detectable. Accordingly, by detecting entering of the positioning point 101 of the vehicle 100c into the detection range RA, the laser sensor 96 can detect that the wheel 190 falls off from the drum 91. In this embodiment, the positioning point 101 of the vehicle 100c is a front bumper of the vehicle 100c. Therefore, the laser sensor 96 is installed at a position where the front bumper of the vehicle 100c is present when the wheel 190 falls off from the drum 91. Note that in another embodiment, the positioning point 101 of the vehicle 100c may be a rear bumper of the vehicle 100c. In this case, the laser sensor 96 is installed at a position where falling of the wheel 190 off from the drum 91 to the rear side of the vehicle 100c is detectable. Alternatively, the positioning point 101 of the vehicle 100c may be the wheel 190. In this case, the laser sensor 96 is installed at a position where the wheel 190 is present when the wheel 190 falls off from the drum 91. The installation position of the laser sensor 96 can be experimentally or empirically determined in advance.

The inspection equipment 900c further includes a communication device 99 to communicate with an external device, such as the server 200c, by wireless communication. The laser sensor 96 is coupled to the communication device 99 of the inspection equipment 900c.

As illustrated in Fig. 10, the vehicle 100c does not include the detection sensor 700 but includes the vehicle control device 110, the actuator group 120, and the communication device 130. Note that in another embodiment, the vehicle 100c may include the detection sensor 700.

A processor 201c of the server 200c executes the program PG2 stored in a memory 202c, thus implementing various functions including functions as a detection unit 211c and the remote control unit 212. The detection unit 211c uses, as the sensor information, the detection result output from the laser sensor 96 provided to the inspection equipment 900c to detect falling of the wheel 190 off from the drum 91. Specifically, the detection unit 211c detects that the wheel 190 falls off from the drum 91 when entering of the positioning point 101 of the vehicle 100c into the detection range RA of the laser sensor 96 is detected.

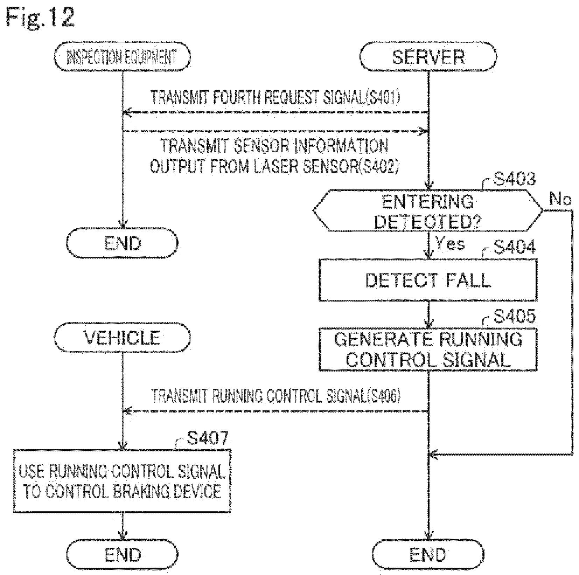

Fig. 12 is a flowchart illustrating a method for controlling the vehicle inspection system 50c according to the fourth embodiment. In the procedure in Fig. 12, the processor 201c of the server 200c executes the program PG2, thus functioning as the detection unit 211c and the remote control unit 212. Moreover, the processor 111 of the vehicle 100c executes the program PG1, thus functioning as the vehicle control unit 115. For example, the control method illustrated in Fig. 12 is repetitively executed at predetermined intervals in a period from a start to an end of inspection using the inspection equipment 900c.

At Step S401, the processor 201c of the server 200c transmits to the inspection equipment 900c a fourth request signal to acquire the sensor information output from the laser sensor 96. At Step S402, the inspection equipment 900c that has received the fourth request signal transmits to the server 200c the sensor information output from the laser sensor 96. If entering of the positioning point 101 of the vehicle 100c into the detection range RA of the laser sensor 96 is not detected (Step S403: No), the processor 201c of the server 200c ends this flow. On the other hand, if entering of the positioning point 101 of the vehicle 100c into the detection range RA of the laser sensor 96 is detected (Step S403: Yes), at Step S404, the processor 201c of the server 200c detects that the wheel 190 falls off from the drum 91. At Step S405, the processor 201c of the server 200c generates the running control signal to increase braking force of the vehicle 100c. At Step S406, the processor 201c of the server 200c transmits the generated running control signal to the vehicle 100c. At Step S407, the processor 111 of the vehicle 100c that has received the running control signal uses the received running control signal to control the braking device and thereby decelerates the vehicle 100c.

According to the fourth embodiment, the vehicle inspection system 50c includes the laser sensor 96 as the detection sensor 700. The detection unit 211c can use the detection result of the laser sensor 96 to detect falling of the wheel 190 off from the drum 91.

Moreover, according to the fourth embodiment, the detection unit 211c can use the sensor information output from the detection sensor 700 disposed at a position different from the vehicle 100c to detect falling of the wheel 190 off from the drum 91. Accordingly, even when the detection sensor 700 is not installed on the vehicle 100c, the vehicle inspection system 50c can detect falling of the wheel 190 off from the drum 91. In such an embodiment, the vehicle inspection system 50c can be used for various types of the vehicle 100c. Therefore, the vehicle inspection system 50c can have improved versatility.

### E. Fifth Embodiment

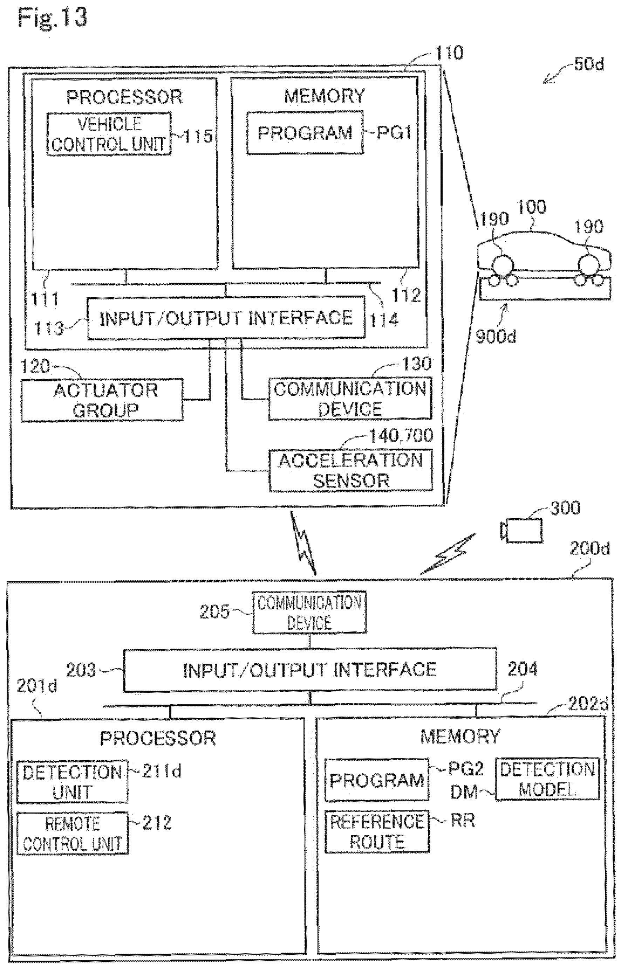

Fig. 13 is a block diagram illustrating a configuration of a vehicle inspection system 50d according to a fifth embodiment. In this embodiment, a configuration of inspection equipment 900d and a configuration of a server 200d are different from those of the first embodiment. Other configurations are the same as those of the first embodiment unless otherwise described. Configurations similar to those of the first embodiment are denoted by the same reference characters, and description thereof is omitted.

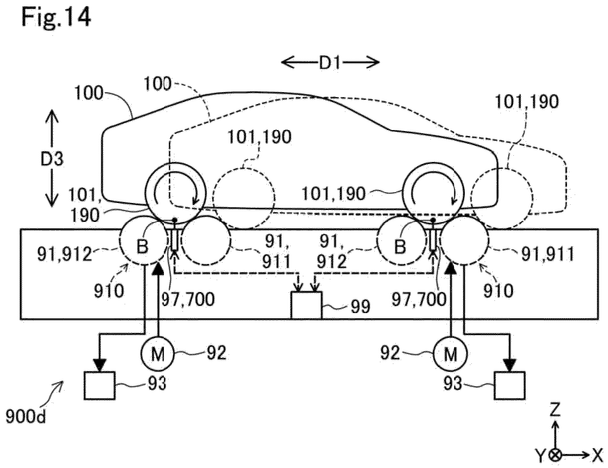

Fig. 14 is a diagram illustrating a configuration of the inspection equipment 900d according to the fifth embodiment. In Fig. 14, the vehicle 100 with the wheel 190 not falling off from the drum 91 is indicated by a solid line, and the vehicle 100 with the wheel 190 falling off from the drum 91 is indicated by a broken line.

The inspection equipment 900d includes a photoelectric sensor 97 as the detection sensor 700. The photoelectric sensor 97 irradiates a predetermined position with a ray of light B to detect presence of an object on the ray of light B and outputs a detection result as the sensor information. The photoelectric sensor 97 is installed at a position where falling of the wheel 190 off from the drum 91 is detectable. Accordingly, the photoelectric sensor 97 can detect falling of the wheel 190 off from the drum 91 in accordance with whether the positioning point 101 of the vehicle 100 is present on the ray of light B. In this embodiment, the positioning point 101 of the vehicle 100 is the wheel 190. Moreover, the photoelectric sensor 97 is installed between the primary drum 911 and the secondary drum 912 so as to be able to detect presence of the wheel 190 between the primary drum 911 and the secondary drum 912. The installation position of the photoelectric sensor 97 can be experimentally or empirically determined in advance. Furthermore, the inspection equipment 900d includes the communication device 99 to communicate with an external device, such as the server 200d, by wireless communication. The photoelectric sensor 97 is coupled to the communication device 99 of the inspection equipment 900d.

As illustrated in Fig. 13, a processor 201d of the server 200d executes the program PG2 stored in a memory 202d, thus implementing various functions including functions as a detection unit 211d and the remote control unit 212. The detection unit 211d uses the sensor information output from a plurality of detection sensors 700 to detect falling of the wheel 190 off from the drum 91. In this embodiment, the detection unit 211d uses, as the sensor information, the detection result output from the photoelectric sensor 97 provided to the inspection equipment 900d, and the acceleration of the vehicle 100 output from the acceleration sensor 140 installed on the vehicle 100 to detect falling of the wheel 190 off from the drum 91. At this time, in this embodiment, the detection unit 211d detects that the wheel 190 falls off from the drum 91 when absence of the wheel 190 as the positioning point 101 of the vehicle 100 on the ray of light B is detected. Moreover, in this embodiment, the detection unit 211d detects that the wheel 190 falls off from the drum 91 when a vibration amount of the vehicle 100 defined by the acceleration of the vehicle 100 is equal to or more than a predetermined second threshold. The vibration amount of the vehicle 100 can be represented by an amplitude when displacements of the vehicle 100 at respective time points are arranged in time series. Each displacement is acquired by integrating acceleration of the vehicle 100 at each time point twice. The second threshold can be experimentally or empirically determined in advance. Note that combination of the plurality of detection sensors 700 may be other than that described above. The plurality of detection sensors 700 may include the same type of sensors, or may include different types of sensors.

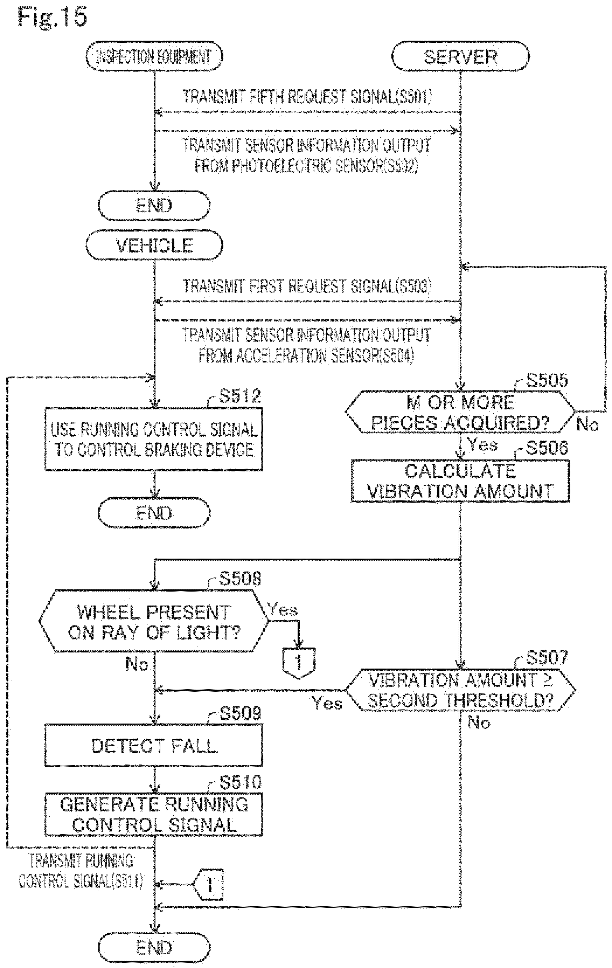

Fig. 15 is a flowchart illustrating a method for controlling the vehicle inspection system 50d according to the fifth embodiment. In the procedure in Fig. 15, the processor 201d of the server 200d executes the program PG2, thus functioning as the detection unit 211d and the remote control unit 212. Moreover, the processor 111 of the vehicle 100 executes the program PG1, thus functioning as the vehicle control unit 115. For example, the control method illustrated in Fig. 15 is repetitively executed at predetermined intervals in a period from a start to an end of inspection using the inspection equipment 900d.

At Step S501, the processor 201d of the server 200d transmits to the inspection equipment 900d a fifth request signal to acquire the sensor information output from the photoelectric sensor 97. At Step S502, the inspection equipment 900d that has received the fifth request signal transmits to the server 200d the sensor information output from the photoelectric sensor 97. At Step S503, the processor 201d of the server 200d transmits to the vehicle 100 the first request signal to acquire the sensor information output from the acceleration sensor 140. At Step S504, the processor 111 of the vehicle 100 that has received the first request signal transmits to the server 200d the sensor information output from the acceleration sensor 140. Step S503 and Step S504 are repetitively executed in this order for a period until the server 200d acquires predetermined M (M is an integer of 2 or more) or more pieces of the sensor information output from the acceleration sensor 140. If the server 200d acquires M or more pieces of the sensor information output from the acceleration sensor 140 (Step S505: Yes), at Step S506, the processor 201d of the server 200d calculates the vibration amount of the vehicle 100. If the vibration amount of the vehicle 100 is less than the second threshold (Step S507: No), and presence of the wheel 190 on the ray of light B is detected (Step S508: Yes), the processor 201d of the server 200d ends this flow. On the other hand, in at least one of cases where the vibration amount of the vehicle 100 is equal to or more than the second threshold (Step S507: Yes) or absence of the wheel 190 on the ray of light B is detected (Step S508: No), at Step S509, the processor 201d of the server 200d detects that the wheel 190 falls off from the drum 91. At Step S510, the processor 201d of the server 200d generates the running control signal to increase braking force of the vehicle 100. At Step S511, the processor 201d of the server 200d transmits the generated running control signal to the vehicle 100. At Step S512, the processor 111 of the vehicle 100 that has received the running control signal uses the received running control signal to control the braking device and thereby decelerates the vehicle 100.

According to the fifth embodiment, the vehicle inspection system 50d includes a plurality of detection sensors 700. The detection unit 211d can use the sensor information output from each of the plurality of detection sensors 700 to detect falling of the wheel 190 off from the drum 91. In such an embodiment, the detection unit 211d can more surely detect falling of the wheel 190 off from the drum 91.

Note that the detection unit 211d may use the sensor information output from each of three or more detection sensors 700 to detect falling of the wheel 190 off from the drum 91. In such an embodiment, the detection unit 211d can further more surely detect falling of the wheel 190 off from the drum 91.

Moreover, according to the fifth embodiment, the vehicle inspection system 50d includes the photoelectric sensor 97 as the detection sensor 700. Then, the detection unit 211d can use the detection result of the photoelectric sensor 97 to detect falling of the wheel 190 off from the drum 91.

Moreover, according to the fifth embodiment, the photoelectric sensor 97 is installed between the primary drum 911 and the secondary drum 912 so as to be able to detect presence of the wheel 190 as the positioning point 101 of the vehicle 100 between the primary drum 911 and the secondary drum 912. When absence of the wheel 190 as the positioning point 101 of the vehicle 100 on the ray of light B is detected, the detection unit 211d can detect that the wheel 190 falls off from the drum 91.

Note that in another embodiment, the photoelectric sensor 97 may be installed at a position where the wheel 190 is present when the wheel 190 falls off from the drum 91. In this case, when presence of the wheel 190 as the positioning point 101 of the vehicle 100 on the ray of light B is detected, the detection unit 211d may detect that the wheel 190 falls off from the drum 91. Also in such an embodiment, the detection unit 211d can use the detection result of the photoelectric sensor 97 to detect falling of the wheel 190 off from the drum 91.

Moreover, according to the fifth embodiment, the vehicle inspection system 50d includes the acceleration sensor 140 as the detection sensor 700. When the vibration amount of the vehicle 100 defined by the acceleration of the vehicle 100 is equal to or more than the second threshold, the detection unit 211d can detect that the wheel 190 falls off from the drum 91. That is, also in such an embodiment, the detection unit 211d can use the acceleration of the vehicle 100 to detect falling of the wheel 190 off from the drum 91.

### F. Sixth Embodiment

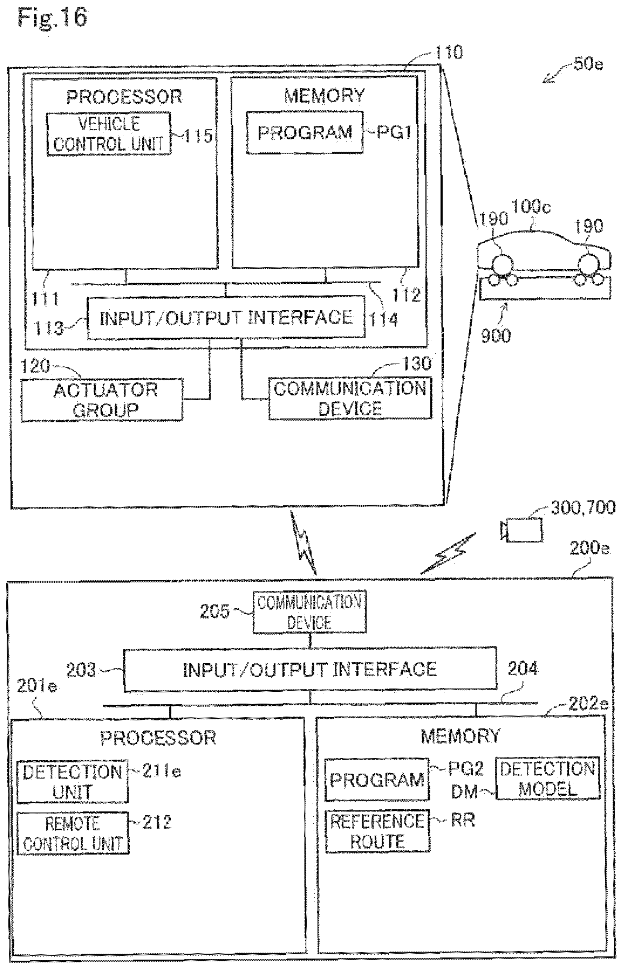

Fig. 16 is a block diagram illustrating a configuration of a vehicle inspection system 50e according to a sixth embodiment. In this embodiment, the configuration of the vehicle 100c and a configuration of a server 200e are different from those of the first embodiment. Other configurations are the same as those of the first embodiment unless otherwise described. Configurations similar to those of the first embodiment are denoted by the same reference characters, and description thereof is omitted.

The vehicle 100c does not include the detection sensor 700 but includes the vehicle control device 110, the actuator group 120, and the communication device 130. Note that in another embodiment, the vehicle 100c may include the detection sensor 700.

A processor 201e of the server 200e executes the program PG2 stored in a memory 202e, thus implementing various functions including functions as a detection unit 211e and the remote control unit 212. The detection unit 211e uses the sensor information output from a sensor capable of acquiring a position of the vehicle 100c to detect falling of the wheel 190 off from the drum 91. In this embodiment, the detection unit 211e uses, as the sensor information, a captured image output from a camera as the external sensor 300 to detect falling of the wheel 190 off from the drum 91. That is, in this embodiment, the detection sensor 700 is the camera as the external sensor 300. Specifically, the detection unit 211e detects that the wheel 190 falls off from the drum 91 when the position of the vehicle 100c identified by vehicle position information acquired by using the captured image is outside of a predetermined given range. The given range of the position of the vehicle 100c can be experimentally or empirically determined in advance. At this time, the given range of the position of the vehicle 100c can be determined in accordance with the steering angle of the vehicle 100c. In this case, for example, the given range of the position of the vehicle 100c can be determined by examining a relationship between the steering angle of the vehicle 100c indicated by the running control signal and the position of the vehicle 100c in advance.

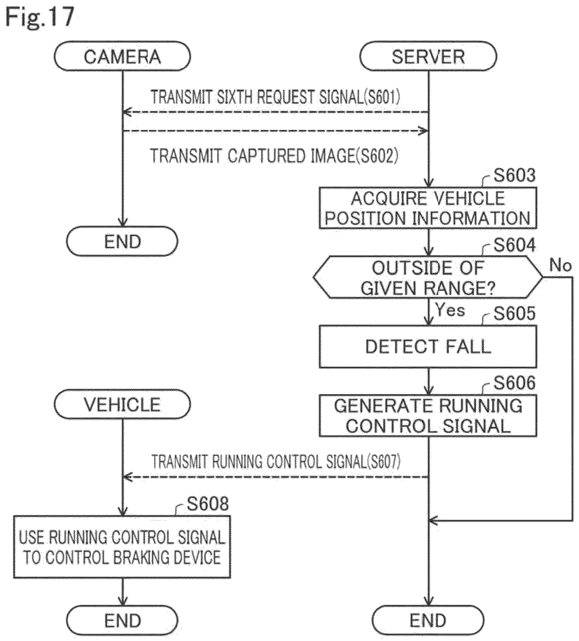

Fig. 17 is a flowchart illustrating a method for controlling the vehicle inspection system 50e according to the sixth embodiment. In the procedure in Fig. 17, the processor 201e of the server 200e executes the program PG2, thus functioning as the detection unit 211e and the remote control unit 212. Moreover, the processor 111 of the vehicle 100c executes the program PG1, thus functioning as the vehicle control unit 115. For example, the control method illustrated in Fig. 17 is repetitively executed at predetermined intervals in a period from a start to an end of inspection using the inspection equipment 900.

At Step S601, the processor 201e of the server 200e transmits to the camera a sixth request signal to acquire the captured image. At Step S602, the camera that has received the sixth request signal transmits to the server 200e the captured image. At Step S603, the processor 201e of the server 200e uses the captured image to acquire the vehicle position information. If the position of the vehicle 100c is in the predetermined given range (Step S604: No), the processor 201e of the server 200e ends this flow. On the other hand, if the position of the vehicle 100c is outside of the predetermined given range (Step S604: Yes), at Step S605, the processor 201e of the server 200e detects that the wheel 190 falls off from the drum 91. At Step S606, the processor 201e of the server 200e generates the running control signal to increase braking force of the vehicle 100c. At Step S607, the processor 201e of the server 200e transmits the generated running control signal to the vehicle 100c. At Step S608, the processor 111 of the vehicle 100c that has received the running control signal uses the received running control signal to control the braking device and thereby decelerates the vehicle 100c.

According to the sixth embodiment, the vehicle inspection system 50e includes, as the detection sensor 700, the camera that can acquire the position of the vehicle 100c and outputs the captured image. When the position of the vehicle 100c acquired by using the captured image is outside of the predetermined given range, the detection unit 211e can detect that the wheel 190 falls off from the drum 91. That is, the detection unit 211e can use the position of the vehicle 100c to detect falling of the wheel 190 off from the drum 91.

According to the sixth embodiment, the detection unit 211e can use the sensor information output from the external sensor 300 to detect falling of the wheel 190 off from the drum 91. The external sensor 300 is installed in advance in the factory FC to allow the vehicle 100c to run by unmanned driving. Accordingly, the vehicle inspection system 50e can detect falling of the wheel 190 off from the drum 91 even when the detection sensor 700 used exclusively for detection of falling of the wheel 190 off from the drum 91 is not disposed purposely outside of the vehicle 100c. This can suppress installation costs of the vehicle inspection system 50e.

### G. Seventh Embodiment

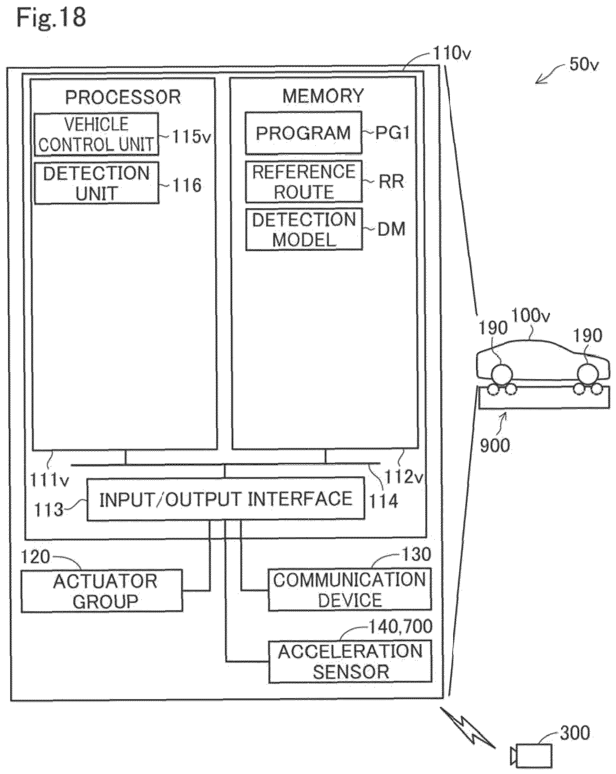

Fig. 18 is an explanatory diagram illustrating a schematic configuration of a vehicle inspection system 50v according to a seventh embodiment. In this embodiment, the vehicle inspection system 50v is different from that of the first embodiment in that the vehicle inspection system 50v does not include the server 200. Moreover, a vehicle 100v according to this embodiment is runnable by autonomous control of the vehicle 100v. Other configurations are the same as those of the first embodiment unless otherwise described.

In this embodiment, a processor 111v of a vehicle control device 110v executes the program PG1 stored in a memory 112v, thus functioning as a detection unit 116 and a vehicle control unit 115v. The detection unit 116 uses the sensor information output from the detection sensor 700 to detect falling of the wheel 190 off from the drum 91. In this embodiment, the detection unit 116 detects that the wheel 190 falls off from the drum 91 when acceleration of the vehicle 100v identified by the sensor information output from the acceleration sensor 140 installed on the vehicle 100v is equal to or more than the first threshold. The vehicle control unit 115v acquires the output result of the external sensor 300 and uses the output result to generate the running control signal. The vehicle control unit 115v then outputs the generated running control signal to cause the actuator group 120 to operate, and thus can cause the vehicle 100v to run by autonomous control. Then, when falling of the wheel 190 off from the drum 91 is detected, the vehicle control unit 115v generates the running control signal to increase braking force of the vehicle 100v and outputs the generated running control signal to cause the braking device to operate, and thereby decelerates the vehicle 100v. In this embodiment, the memory 112v stores, in addition to the program PG1, a detection model DM and a reference route RR in advance.

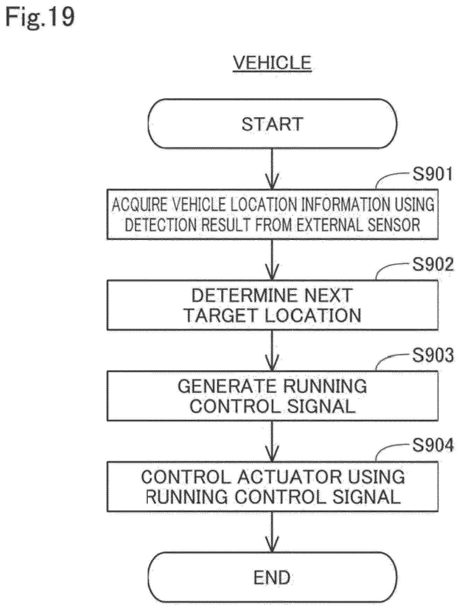

Fig. 19 is a flowchart illustrating a procedure for running control of the vehicle 100v according to the seventh embodiment. In the procedure in Fig. 19, the processor 111v of the vehicle 100v executes the program PG1, thus functioning as the vehicle control unit 115v.

In step S901, the processor 111v of the vehicle control device 110v acquires vehicle location information using detection result output from the camera as an external sensor. In step S902, the processor 111v determines a target location to which the vehicle 100v is to move next. In step S903, the processor 111v generates a running control signal for causing the vehicle 100v to run to the determined target location. In step S904, the processor 111v controls the actuator group 120 using the generated running control signal, thereby causing the vehicle 100 to run by following a parameter indicated by the running control signal. The processor 111v repeats the acquisition of vehicle location information, the determination of a target location, the generation of a running control signal, and the control over the actuator group 120 in a predetermined cycle. According to the vehicle inspection system 50v in the present embodiment, it is possible to cause the vehicle 100v to run by autonomous control without controlling the vehicle 100v remotely using the server 200.

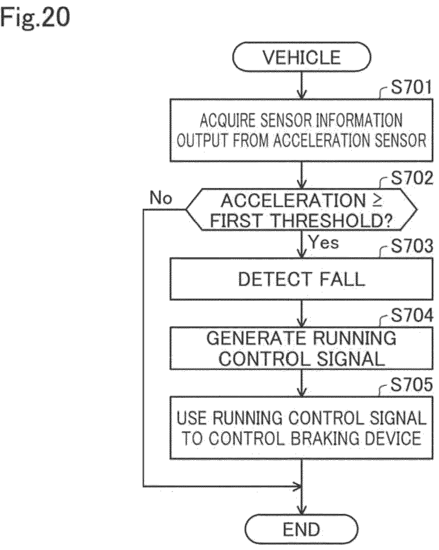

Fig. 20 is a flowchart illustrating a method for controlling the vehicle inspection system 50v according to the seventh embodiment. In the procedure in Fig. 20, the processor 111v of the vehicle 100v executes the program PG1, thus functioning as the detection unit 116 and the vehicle control unit 115v. For example, the control method illustrated in Fig. 20 is repetitively executed at predetermined intervals in a period from a start to an end of inspection using the inspection equipment 900.

At Step S701, the processor 111v of the vehicle 100v acquires the sensor information output from the acceleration sensor 140. If the acceleration of the vehicle 100v is less than the first threshold (Step S702: No), the processor 111v of the vehicle 100v ends this flow. On the other hand, if the acceleration of the vehicle 100v is equal to or more than the first threshold (Step S702: Yes), at Step S703, the processor 111v of the vehicle 100v detects that the wheel 190 falls off from the drum 91. At Step S704, the processor 111v of the vehicle 100v generates the running control signal to increase braking force of the vehicle 100v. At Step S705, the processor 111v of the vehicle 100v uses the generated running control signal to control the braking device and thereby decelerates the vehicle 100v.

According to the seventh embodiment, in a case of inspection of the vehicle 100v by utilizing running of the vehicle 100v by unmanned driving, the detection unit 116 of the vehicle control device 110v can use the sensor information to detect falling of the wheel 190 off from the drum 91 of the inspection equipment 900. Then, when falling of the wheel 190 off from the drum 91 is detected, the vehicle control unit 115v of the vehicle control device 110v can behave as follows. In this case, the vehicle control unit 115v generates the running control signal to increase braking force of the vehicle 100v and uses the generated running control signal to control the braking device, and thereby can decelerate the vehicle 100v. Accordingly, when the wheel 190 falls off from the drum 91, autonomous control of the vehicle 100v can reduce the possibility of the vehicle 100v contacting another object.

Moreover, according to the seventh embodiment, the vehicle control device 110v uses the sensor information output from the detection sensor 700 installed on the vehicle 100v to detect falling of the wheel 190 off from the drum 91, and thereby can decelerate the vehicle 100v. That is, when the wheel 190 falls off from the drum 91, the vehicle control device 110v can decelerate the vehicle 100v without transmission and reception of information to/from the server 200 and the external sensor 300. Accordingly, the vehicle inspection system 50v can promptly decelerate the vehicle 100v.

### H. Other Embodiments

(H1) When falling of the wheel 190 off from the drum 91 is detected, the control unit 115v, 212, 212a may decelerate the vehicle 100, 100b, 100c, 100v to stop the vehicle 100, 100b, 100c, 100v. In such an embodiment, when the wheel 190 falls off from the drum 91, the vehicle 100, 100b, 100c, 100v can have further less possibility of contacting another object.

(H2) The control unit 115v, 212, 212a may set a shift position of an electric shift provided to the vehicle 100, 100b, 100c, 100v to a parking range after the vehicle 100, 100b, 100c, 100v stops. In such an embodiment, the control unit 115v, 212, 212a can completely stop the vehicle 100, 100b, 100c, 100v. Accordingly, when the wheel 190 falls off from the drum 91, the vehicle 100, 100b, 100c, 100v can more surely have less possibility of contacting another object.

(H3) The control unit 115v, 212, 212a may actuate a parking brake provided to the vehicle 100, 100b, 100c, 100v after the vehicle 100, 100b, 100c, 100v stops. In such an embodiment, the control unit 115v, 212, 212a can completely stop the vehicle 100, 100b, 100c, 100v. Accordingly, when the wheel 190 falls off from the drum 91, the vehicle 100, 100b, 100c, 100v can more surely have less possibility of contacting another object.

(H4) When falling of the wheel 190 off from the drum 91 is detected, the control unit 115v, 212, 212a may actuate regenerative brake to decelerate or stop the vehicle 100, 100b, 100c, 100v. In such an embodiment, actuation of the regenerative brake instead of the braking device such as a disc brake device can decelerate or stop the vehicle 100, 100b, 100c, 100v. Moreover, actuation of the regenerative brake in addition to the braking device such as a disc brake device can more surely decelerate or stop the vehicle 100, 100b, 100c, 100v. Accordingly, when the wheel 190 falls off from the drum 91, the vehicle 100, 100b, 100c, 100v can more surely have less possibility of contacting another object.

(H5) The drum 91 may be provided for each of a plurality of wheels 190 arranged in the left-right direction D2 of the vehicle 100, 100b, 100c, 100v. For example, in a case in which the vehicle 100, 100b, 100c, 100v is a four-wheeled vehicle, the inspection equipment 900, 900c, 900d may have the following configuration. The inspection equipment 900, 900c, 900d may include one front drum unit supporting a left front wheel and a right front wheel of the vehicle 100, 100b, 100c, 100v, and one rear drum unit supporting a left rear wheel and a right rear wheel of the vehicle 100, 100b, 100c, 100v. The inspection equipment 900, 900c, 900d may include one front drum unit supporting the left front wheel and the right front wheel of the vehicle 100, 100b, 100c, 100v, and one rear single drum supporting the left rear wheel and the right rear wheel of the vehicle 100, 100b, 100c, 100v. As such, the number and arrangement of the drums 91 in the inspection equipment 900, 900c, 900d are not limited to those described above.

(H6) The vehicle inspection system 50, 50a to 50e, 50v may be used for a purpose other than the new inspection of the vehicle 100, 100b, 100c, 100v. For example, the vehicle inspection system 50, 50a to 50e, 50v may be used for continuous inspection of the vehicle 100, 100b, 100c, 100v. The continuous inspection is defined in the Road Transport Vehicle Act and is inspection performed to continuously use the vehicle 100, 100b, 100c, 100v also after expiration of an expiration date of an automobile inspection certificate. The vehicle inspection system 50, 50a to 50e, 50v may also be used for periodic inspection. The periodic inspection is defined in the Road Transport Vehicle Act and is inspection that is mandatory for a user of the vehicle 100, 100b, 100c, 100v to undergo periodically. The periodic inspection is also referred to as statutory inspection. Also in such an embodiment, when falling of the wheel 190 off from the drum 91 is detected, the vehicle inspection system 50, 50a to 50e, 50v can decelerate the vehicle 100, 100b, 100c, 100v. Accordingly, when the wheel 190 falls off from the drum 91, the vehicle inspection system 50, 50a to 50e, 50v can reduce possibility of the vehicle 100, 100b, 100c, 100v contacting another object.

(H8) At least a partial function of the server 200, 200a to 200e may be one function of the vehicle control device 110, 110v, one function of the inspection equipment 900, 900c, 900d, or one function of the external sensor 300 or the detection sensor 700. Moreover, at least a partial function of the vehicle control device 110, 110v may be one function of the server 200, 200a to 200e, one function of the inspection equipment 900, 900c, 900d, or one function of the external sensor 300 or the detection sensor 700. In such an embodiment, the configuration of the vehicle inspection system 50, 50a to 50e, 50v is suitably changeable.

(H8) In each of the above-described embodiments, the external sensor 300 is not limited to the camera but may be the distance measuring device, for example. The distance measuring device is a light detection and ranging (LiDAR) device, for example. In this case, detection result output from the external sensor 300 may be three-dimensional point cloud data representing the vehicle 100,100b,100c,100v. The server 200,200a-200e and the vehicle 100,100b,100c,100v may acquire the vehicle location information through template matching using the three-dimensional point cloud data as the detection result and reference point cloud data, for example.

(H9) In each of the above-described first embodiment to sixth embodiment, the server 200,200a-200e performs the processing from acquisition of vehicle location information to generation of a running control signal. By contrast, the vehicle 100,100b,100c may perform at least part of the processing from acquisition of vehicle location information to generation of a running control signal. For example, embodiments (1) to (3) described below are applicable, for example.

(1) The server 200.200a-200e may acquire vehicle location information, determine a target location to which the vehicle 100,100b,100c is to move next, and generate a route from a current location of the vehicle 100,100b,100c indicated by the acquired vehicle location information to the target location. The server 200,200a-200e may generate a route to the target location between the current location and a destination or generate a route to the destination. The server 200,200a-200e may transmit the generated route to the vehicle 100,100b,100c. The vehicle 100,100b,100c may generate a running control signal in such a manner as to cause the vehicle 100,100b,100c to run along the route received from the server 200 and control the actuator group 120 using the generated running control signal.

(2) The server 200,200a-200e may acquire vehicle location information and transmit the acquired vehicle location information to the vehicle 100,100b,100c. The vehicle 100,100b,100c may determine a target location to which the vehicle 100,100b,100c is to move next, generate a route from a current location of the vehicle 100,100b,100c indicated by the received vehicle location information to the target location, generate a running control signal in such a manner as to cause the vehicle 100,100b,100c to run along the generated route, and control the actuator group 120 using the generated running control signal.

(3) In the foregoing embodiments (1) and (2), an internal sensor may be mounted on the vehicle 100,100b,100c, and detection result output from the internal sensor may be used in at least one of the generation of the route and the generation of the running control signal. The internal sensor is a sensor mounted on the vehicle 100,100b,100c. More specifically, the internal sensor might include a camera, LiDAR, a millimeter wave radar, an ultrasonic wave sensor, a GPS sensor, an acceleration sensor 140, and a gyroscopic sensor, for example. For example, in the foregoing embodiment (1), the server 200,200a-200e may acquire detection result from the internal sensor, and in generating the route, may reflect the detection result from the internal sensor in the route. In the foregoing embodiment (1), the vehicle 100,100b,100c may acquire detection result from the internal sensor, and in generating the running control signal, may reflect the detection result from the internal sensor in the running control signal. In the foregoing embodiment (2), the vehicle 100,100b,100c may acquire detection result from the internal sensor, and in generating the route, may reflect the detection result from the internal sensor in the route. In the foregoing embodiment (2), the vehicle 100,100b,100c may acquire detection result from the internal sensor, and in generating the running control signal, may reflect the detection result from the internal sensor in the running control signal.

(H10) In the above-described seventh embodiment, the vehicle 100v may be equipped with an internal sensor, and detection result output from the internal sensor may be used in at least one of generation of a route and generation of a running control signal. For example, the vehicle 100v may acquire detection result from the internal sensor, and in generating the route, may reflect the detection result from the internal sensor in the route. The vehicle 100v may acquire detection result from the internal sensor, and in generating the running control signal, may reflect the detection result from the internal sensor in the running control signal.

(H11) In the above-described seventh embodiment, the vehicle 100v acquires vehicle location information using detection result from the external sensor 300. By contrast, the vehicle 100v may be equipped with an internal sensor, the vehicle 100v may acquire vehicle location information using detection result from the internal sensor, determine a target location to which the vehicle 100v is to move next, generate a route from a current location of the vehicle 100v indicated by the acquired vehicle location information to the target location, generate a running control signal for running along the generated route, and control the actuator group 120 using the generated running control signal. In this case, the vehicle 100v is capable of running without using any detection result from the external sensor 300. The vehicle 100v may acquire target arrival time or traffic congestion information from outside the vehicle 100v and reflect the target arrival time or traffic congestion information in at least one of the route and the running control signal. The functional configuration of the vehicle inspection system 50v may be entirely provided at the vehicle 100v. Specifically, the processes realized by the vehicle inspection system 50v in the present disclosure may be realized by the vehicle 100v alone.

(H12) In each of the above-described first embodiment to sixth embodiment, the server 200,200a-200e automatically generates a running control signal to be transmitted to the vehicle 100,100b,100c. By contrast, the server 200,200a-200e may generate a running control signal to be transmitted to the vehicle 100,100b,100c in response to operation by an external operator existing outside the vehicle 100,100b,100c. For example, the external operator may operate an operating device including a display on which a captured image output from the external sensor 300 is displayed, steering, an accelerator pedal, and a brake pedal for operating the vehicle 100,100b,100c remotely, and a communication device for making communication with the server 200,200a-200e through wire communication or wireless communication, for example, and the server 200,200a-200e may generate a running control signal responsive to the operation on the operating device.

(H13) In each of the above-described embodiments, the vehicle 100,100b,100c,100v is simply required to have a configuration to become movable by unmanned driving. The vehicle 100,100b,100c,100v may embodied as a platform having the following configuration, for example. The vehicle 100,100b,100c,100v is simply required to include at least the vehicle control device 110,110v and the actuator group120in order to fulfill three functions including "run," "turn," and "stop" In order for the vehicle 100,100b,100c,100v to acquire information from outside for unmanned driving, the vehicle 100,100b,100c,100v is simply required to include the communication device 130 further. Specifically, the vehicle 100,100b,100c,100v to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100,100b,100c,100v before the vehicle 100,100b,100c,100v is shipped from a factory, or a remaining component such as a bodyshell may be mounted on the vehicle 100,100b,100c,100v after the vehicle 100,100b,100c,100v is shipped from a factory while the remaining component such as a bodyshell is not mounted on the vehicle 100,100b,100c,100v. Each of components may be mounted on the vehicle 100,100b,100c,100v from any direction such as from above, from below, from the front, from the back, from the right, or from the left. Alternatively, these components may be mounted from the same direction or from respective different directions. The location determination for the platform may be performed in the same way as for the vehicle 100,100b,100c,100v In each of the above-described embodiments.

(H14) The vehicle 100,100b,100c,100v may be manufactured by combining a plurality of modules. The module means a unit composed of one or more components grouped according to a configuration or function of the vehicle 100,100b,100c,100v. For example, a platform of the vehicle 100,100b,100c,100v may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100,100b,100c,100v different from the platform may be modularized. Various modules may include an arbitrary exterior component such as a bumper or a grill, or an arbitrary interior component such as a seat or a console. Not only the vehicle 100,100b,100c,100v but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(H15) A configuration for realizing running of the vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(H16) In each of the embodiments described above, some or all of the functions and processing implemented in the form of software may be implemented in the form of hardware. Further, some or all of the functions and processing implemented in the form of hardware may be implemented in the form of software. For example, various types of circuits, such as an integrated circuit and a discrete circuit, may be used as hardware for implementing various functions in each embodiment.

## Claims

1. A vehicle inspection system (50;50a;50b;50c;50d;50e;50v) comprising:
a vehicle (100;100b;100c;100v) runnable by unmanned driving;
inspection equipment (900;900b;900c) comprising a drum (91;91d) configured to rotate while the drum supports a wheel (190) of the vehicle; **characterized by** further comprising :
a sensor (96;97;140;150;300) configured to output sensor information to detect falling of the wheel off from the drum;
a detection unit (116;211;211b;211c;211d;211e) configured to use the sensor information to detect falling of the wheel off from the drum; and
a control (115v;212;212a) unit configured to increase braking force of the vehicle when falling of the wheel off from the drum is detected.

2. The vehicle inspection system (50a) according to claim 1, further comprising an acquisition unit (213) configured to acquire information on weight of the vehicle, wherein
the control unit (212a) sets the braking force to be caused when the wheel (190) falls off from the drum (91) larger as the weight of the vehicle (100) increases.

3. The vehicle inspection system (50;50a;50d;50v) according to claim 1 or 2, wherein
the sensor (140) comprises an acceleration sensor (140) configured to measure acceleration of the vehicle (100;100v) and output the acceleration as the sensor information, and
the detection unit (116;211;211d) uses the acceleration to detect falling of the wheel (190) off from the drum (91;91d).

4. The vehicle inspection system (50b) according to claim 1, 2 or 3, wherein
the sensor (150) comprises a steering angle sensor (150) configured to measure an actual steering angle of the vehicle (100b) and output the actual steering angle as the sensor information, and
the detection unit (211b) uses the actual steering angle to detect falling of the wheel (190) off from the drum (91).

5. The vehicle inspection system (50c) according to any preceding claim, wherein
the sensor (96) comprises a laser sensor (96) configured to detect entering of an object into a predetermined detection range and output a detection result as the sensor information, and
the detection unit (211c) uses the detection result to detect falling of the wheel (190) off from the drum (91).

6. The vehicle inspection system (50d) according to any preceding claim, wherein
the sensor (97) comprises a photoelectric sensor (97) configured to irradiate a predetermined position with a ray of light to detect presence of an object on the ray of light and output a detection result as the sensor information, and
the detection unit (211d) uses the detection result to detect falling of the wheel (190) off from the drum (91).

7. The vehicle inspection system (50e) according to any preceding claim, wherein
the sensor (300) comprises a sensor (300) capable of acquiring a position of the vehicle (100c) and configured to output the sensor information, and
the detection unit (211e) uses the position of the vehicle (100c) acquired by using the sensor information to detect falling of the wheel (190) off from the drum (91).

8. The vehicle inspection system (50d) according to any preceding claim, comprising a plurality of the sensors (97;140), wherein
the detection unit (211d) uses the sensor information output from each of the plurality of sensors to detect falling of the wheel (190) off from the drum (91d).

9. A control method comprising:
a detection step to detect falling of a wheel (190) of a vehicle (100;100b;100c;100v) runnable by unmanned driving off from a drum (91) by using sensor information output form a sensor, the drum rotating while supporting the wheel; and
a control step to increase braking force of the vehicle when falling of the wheel (190) off from the drum (91;91d) is detected.

## Patentansprüche

1. Fahrzeugprüfsystem (50; 50a; 50b; 50c; 50d; 50e; 50v), das umfasst:
ein Fahrzeug (100; 100b; 100c; 100v), das im fahrerlosen Fahrbetrieb betrieben werden kann;
eine Prüfvorrichtung (900; 900b; 900c), die eine Trommel (91; 91d) umfasst, die so ausgelegt ist, dass sie sich dreht, während die Trommel ein Rad (190) des Fahrzeugs trägt;
**dadurch gekennzeichnet, dass** sie ferner umfasst:
einen Sensor (96; 97; 140; 150; 300), der so ausgelegt ist, dass er Sensorinformationen ausgibt, um ein Herabfallen des Rades von der Trommel zu erfassen;
eine Erfassungseinheit (116; 211; 211b; 211c; 211d; 211e), die so ausgelegt ist, dass sie die Sensorinformationen verwendet, um das Herabfallen des Rades von der Trommel zu erfassen; und
eine Steuereinheit (115v; 212; 212a), die so ausgelegt ist, dass sie die Bremskraft des Fahrzeugs erhöht, wenn das Herabfallen des Rades von der Trommel erfasst wird.

2. Fahrzeugprüfsystem (50a) nach Anspruch 1, das ferner eine Erfassungseinheit (213) umfasst, die so ausgelegt ist, dass sie Informationen über das Gewicht des Fahrzeugs erfasst, wobei
die Steuereinheit (212a) die Bremskraft, die ausgelöst werden soll, wenn das Rad (190) von der Trommel (91) abfällt, umso größer einstellt, je höher das Gewicht des Fahrzeugs (100) ist.

3. Fahrzeugprüfsystem (50; 50a; 50d; 50v) nach Anspruch 1 oder 2, wobei der Sensor (140) einen Beschleunigungssensor (140) umfasst, der so ausgelegt ist, dass er die Beschleunigung des Fahrzeugs (100; 100v) misst und die Beschleunigung als Sensorinformationen ausgibt, und
die Erfassungseinheit (116; 211; 211d) die Beschleunigung verwendet, um ein Abfallen des Rades (190) von der Trommel (91; 91d) zu erfassen.

4. Fahrzeugprüfsystem (50b) nach Anspruch 1, 2 oder 3, wobei
der Sensor (150) einen Lenkwinkelsensor (150) umfasst, der so ausgelegt ist, dass er einen tatsächlichen Lenkwinkel des Fahrzeugs (100b) misst und den tatsächlichen Lenkwinkel als Sensorinformationen ausgibt, und
die Erfassungseinheit (211b) den tatsächlichen Lenkwinkel verwendet, um ein Abfallen des Rads (190) von der Trommel (91) zu erfassen.

5. Fahrzeugprüfsystem (50c) nach einem der vorhergehenden Ansprüche, wobei
der Sensor (96) einen Lasersensor (96) umfasst, der so ausgelegt ist, dass er das Eindringen eines Objekts in einen vorbestimmten Erfassungsbereich erfasst und ein Erfassungsergebnis als Sensorinformationen ausgibt, und
die Erfassungseinheit (211c) das Erfassungsergebnis verwendet, um ein Abfallen des Rades (190) von der Trommel (91) zu erfassen.

6. Fahrzeugprüfsystem (50d) nach einem der vorhergehenden Ansprüche, wobei
der Sensor (97) einen fotoelektrischen Sensor (97) umfasst, der so ausgelegt ist, dass er eine vorbestimmte Position mit einem Lichtstrahl bestrahlt, um das Vorhandensein eines Objekts im Lichtstrahl zu erfassen und ein Erfassungsergebnis als Sensorinformationen auszugeben, und
die Erfassungseinheit (211d) das Erfassungsergebnis verwendet, um ein Abfallen des Rades (190) von der Trommel (91) zu erfassen.

7. Fahrzeugprüfsystem (50e) nach einem der vorhergehenden Ansprüche, wobei
der Sensor (300) einen Sensor (300) umfasst, der in der Lage ist, eine Position des Fahrzeugs (100c) zu erfassen, und der so ausgelegt ist, dass er die Sensorinformationen ausgibt, und
die Erfassungseinheit (211e) die unter Verwendung der Sensorinformationen erfasste Position des Fahrzeugs (100c) nutzt, um das Herabfallen des Rads (190) von der Trommel (91) zu erfassen.

8. Fahrzeugprüfsystem (50d) nach einem der vorhergehenden Ansprüche, das eine Vielzahl der Sensoren (97; 140) umfasst, wobei
die Erfassungseinheit (211d) die von jedem der Vielzahl von Sensoren ausgegebenen Sensorinformationen verwendet, um das Herabfallen des Rades (190) von der Trommel (91d) zu erfassen.

9. Steuerungsverfahren, das umfasst:
einen Erfassungsschritt zum Erfassen des Herabfallens eines Rades (190) eines Fahrzeugs (100; 100b; 100c; 100v), das im fahrerlosen Betrieb fahren kann, von einer Trommel (91), unter Verwendung von Sensorinformationen, die von einem Sensor ausgegeben werden, wobei sich die Trommel dreht, während sie das Rad trägt; und
einen Steuerungsschritt zum Erhöhen der Bremskraft des Fahrzeugs, wenn ein Abfallen des Rads (190) von der Trommel (91; 91d) erfasst wird.

## Revendications

1. Système d'inspection de véhicule (50 ; 50a ; 50b ; 50c ; 50d ; 50e ; 50v) comprenant :
un véhicule (100 ; 100b ; 100c ; 100v) pouvant fonctionner sans pilote,
un équipement d'inspection (900 ; 900b ; 900c) comprenant un tambour (91 ; 91d) conçu pour tourner tout en supportant une roue (190) du véhicule ;
**caractérisé en ce qu'**il comprend en outre :
un capteur (96 ; 97 ; 140 ; 150 ; 300) conçu pour transmettre des informations de capteur pour détecter si la roue est tombée du tambour,
une unité de détection (116 ; 211 ; 211b ; 211c ; 211d ; 211e) conçue pour utiliser les informations de capteur pour détecter si la roue est tombée du tambour, et
une unité de commande (115v ; 212 ; 212a) conçue pour augmenter la force de freinage du véhicule lorsqu'il a été détecté que la roue est tombée du tambour.

2. Système d'inspection de véhicule (50a) selon la revendication 1, comprenant en outre une unité d'acquisition (213) conçue pour acquérir des informations sur le poids du véhicule, l'unité de commande (212a) réglant une force de freinage, lorsque la roue (190) tombe du tambour (91), d'autant plus élevée que le poids du véhicule (100) augmente.

3. Système d'inspection de véhicule (50 ; 50a ; 50d ; 50v) selon la revendication 1 ou 2, dans lequel
le capteur (140) comprend un capteur d'accélération (140) conçu pour mesurer l'accélération du véhicule (100 ; 100v) et transmettre l'accélération comme information de capteur, et
l'unité de détection (116 ; 211 ; 211d) utilise l'accélération pour détecter si la roue (190) est tombée du tambour (91 ; 91d).

4. Système d'inspection (50b) selon la revendication 1, 2 ou 3, dans lequel
le capteur (150) comprend un capteur d'angle de braquage (150) conçu pour mesurer un angle de braquage réel du véhicule (100b) et pour transmettre l'angle de braquage réel comme information de capteur, et
l'unité de détection (211b) utilise l'angle de braquage réel pour détecter si la roue (190) est tombée du tambour (91).

5. Système d'inspection de véhicule (50c) selon l'une quelconque des revendications précédentes, dans lequel
le capteur (96) comprend un capteur laser (96) conçu pour détecter qu'un objet est entré dans une plage de détection prédéterminée et pour transmettre un résultat de détection comme information de capteur, et
l'unité de détection (211c) utilise le résultat de détection pour détecter si la roue (190) est tombée du tambour (91).

6. Système d'inspection de véhicule (50d) selon l'une quelconque des revendications précédentes, dans lequel
le capteur (97) comprend un capteur photoélectrique (97) conçu pour irradier une position prédéfinie avec un rayon de lumière pour détecter la présence d'un objet dans le rayon de lumière, et pour transmettre un résultat de détection comme information de capteur, et l'unité de détection (211d) utilise le résultat de détection pour détecter si la roue (190) est tombée du tambour (91).

7. Système d'inspection de véhicule (50e) selon l'une quelconque des revendications précédentes, dans lequel
le capteur (300) comprend un capteur (300) capable d'acquérir une position du véhicule (100c) et conçu pour transmettre les informations de capteur, et
l'unité de détection (211e) utilise la position du véhicule (100c) obtenue au moyen des informations de capteur pour détecter si la roue (190) est tombée du tambour (91).

8. Système d'inspection de véhicule (50d) selon l'une quelconque des revendications précédentes, comprenant une pluralité de capteurs (97 ; 140), et dans lequel
l'unité de détection (211d) utilise les informations de capteur transmises par chacun des capteurs pour détecter si la roue (190) est tombée du tambour (91d).

9. Procédé de commande comprenant :
une étape de détection pour détecter si la roue (190) d'un véhicule (100 ; 100b ; 100c ; 100v) pouvant fonctionner sans pilote est tombée d'un tambour (91) au moyen d'informations de capteur transmises par un capteur, le tambour tournant tout en supportant la roue, et
une étape de commande pour augmenter la force de freinage du véhicule lorsqu'il a été détecté que la roue (190) est tombée du tambour (91 ; 91d).
